# FASCICULE DE BREVET EUROPEEN

(11) **EP 4 417 829 B1**
(45) Date de publication et mention de la délivrance du brevet: **26.11.2025**
(21) Numéro de dépôt: 24157802.0
(22) Date de dépôt: 15.02.2024
(51) Int. Cl.: F16D 3/00

(54) **ACTIONNEUR ÉLECTROMÉCANIQUE ET DISPOSITIF D'OCCULTATION COMPRENANT UN TEL ACTIONNEUR ÉLECTROMÉCANIQUE**
ELEKTROMECHANISCHER AKTUATOR UND VERDUNKELUNGSVORRICHTUNG MIT SOLCH EINEM ELEKTROMECHANISCHEN AKTUATOR
ELECTROMECHANICAL ACTUATOR AND CONCEALMENT DEVICE COMPRISING SUCH AN ELECTROMECHANICAL ACTUATOR

(30) Priorité: 16.02.2023 FR 2301449
(43) Date de publication de la demande: 21.08.2024
(73) Titulaire: Somfy Activites SA, 74300 Cluses (FR)
(72) Inventeur: FOISSARD, Margaux, 74300 CLUSES (FR); MARCHAL, Diane, 74300 CLUSES (FR); BRONDEX, Adrien, 74300 CLUSES (FR)
(74) Mandataire: Lavoix

(56) Documents cités:
- EP-A1- 2 898 811
- WO-A1-2018/228910
- WO-A1-2022/219429
- FR-A1- 3 084 690
- US-A- 5 041 060

## Description

La présente invention concerne un actionneur électromécanique d'un dispositif d'occultation, autrement dit un actionneur électromécanique pour un dispositif d'occultation.

La présente invention concerne également un dispositif d'occultation comprenant un écran entraîné en déplacement par un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

On connaît déjà des actionneurs électromécaniques d'un dispositif d'occultation.

Ces actionneurs électromécaniques comprennent un carter, un moteur électrique, un réducteur et un dispositif de transmission de couple. Le dispositif de transmission de couple comprend un organe monobloc. Le moteur électrique comprend un rotor et un stator. Le réducteur comprend un arbre d'entrée et un arbre de sortie. L'arbre d'entrée du réducteur est accouplé avec le rotor du moteur électrique par l'intermédiaire du dispositif de transmission de couple. Le moteur électrique, le réducteur et le dispositif de transmission de couple sont logés à l'intérieur du carter. L'organe monobloc comprend une première partie, une deuxième partie, une pluralité de premières poutres, une pluralité de deuxièmes poutres et une pluralité de bras. Chacune des premières poutres s'étend à partir de la première partie. Chacune des deuxièmes poutres s'étend à partir de la deuxième partie. En outre, chaque bras s'étend, d'une part, à partir de l'une des premières poutres et, d'autre part, à partir de l'une des deuxièmes poutres.

Cependant, ces actionneurs électromécaniques présentent l'inconvénient que chaque bras est disposé perpendiculairement par rapport à l'une des premières poutres et par rapport à l'une des deuxièmes poutres.

En outre, l'organe monobloc du dispositif de transmission de couple de ces actionneurs électromécaniques présente un encombrement élevé, en particulier en termes de longueur et de diamètre extérieur.

Par ailleurs, les formes de l'organe monobloc du dispositif de transmission de couple de ces actionneurs électromécaniques ne permettent pas de réduire les dimensions de celui-ci, tout en garantissant une valeur de transmission de couple minimale entre le moteur électrique et le réducteur, qui est nécessaire pour un actionneur électromécanique d'un dispositif d'occultation.

On connaît également le document EP 2 372 187 A1, qui peut être considéré comme l'état de la technique le plus proche de l'invention et qui décrit un actionneur électromécanique d'un dispositif d'occultation. L'actionneur électromécanique comprend un carter, un moteur électrique, un réducteur et un dispositif de transmission de couple. Le dispositif de transmission de couple comprend une première pièce d'interface et une deuxième pièce d'interface. Le moteur électrique comprend un rotor et un stator. Le réducteur comprend un arbre d'entrée, formé par un pignon solaire d'un premier étage de réduction du réducteur, et un arbre de sortie, formé par l'arbre de sortie de l'actionneur électromécanique. L'arbre d'entrée du réducteur est accouplé avec le rotor du moteur électrique par l'intermédiaire du dispositif de transmission de couple. Le moteur électrique, le réducteur et le dispositif de transmission de couple sont logés à l'intérieur du carter. La première pièce d'interface est fixée à un arbre du rotor du moteur électrique. La deuxième pièce d'interface est réalisée en deux parties, une première partie en élastomère et une deuxième partie métallique. La première partie de la deuxième pièce d'interface coopère avec la première pièce d'interface. En outre, la deuxième partie de la deuxième pièce est fixée au pignon solaire du premier étage de réduction du réducteur. Cet actionneur électromécanique donne globalement satisfaction.

Cependant, l'actionneur électromécanique de ce document EP 2 372 187 A1 est muet quant à la construction de la première pièce d'interface.

On connaît également le document FR 3 084 690 A1 qui décrit un actionneur électromécanique d'un dispositif d'occultation. L'actionneur électromécanique comprend un carter, un support de couple, un moteur électrique, un réducteur et un module mécanique de filtrage de vibrations. Le moteur électrique comprend un rotor et un stator. Le réducteur comprend un arbre d'entrée et un arbre de sortie, formé par l'arbre de sortie de l'actionneur électromécanique. L'arbre d'entrée du réducteur est accouplé avec le rotor du moteur électrique. Le moteur électrique, le réducteur et le module mécanique de filtrage de vibrations sont logés à l'intérieur du carter. Le support de couple est disposé au niveau d'une extrémité du carter. Le module mécanique de filtrage de vibrations comprend un organe de filtrage de vibrations monobloc. En outre, une première portion d'extrémité de l'organe de filtrage de vibrations est fixée au carter au moyen de premiers éléments de fixation et une deuxième portion d'extrémité de l'organe de filtrage de vibrations est fixée au support de couple au moyen de deuxièmes éléments de fixation.

Cependant, l'actionneur électromécanique de ce document FR 3 084 690 A1 est muet concernant l'accouplement de l'arbre d'entrée du réducteur avec le rotor du moteur électrique.

La présente invention a pour but de résoudre les inconvénients précités et de proposer un actionneur électromécanique d'un dispositif d'occultation, ainsi qu'un dispositif d'occultation comprenant un tel actionneur électromécanique, comprenant un dispositif de transmission de couple permettant de rattraper un ou plusieurs désalignements axiaux, radiaux et/ou angulaires entre un rotor d'un moteur électrique et un arbre d'entrée d'un réducteur, de sorte à transmettre un couple fourni par le moteur électrique, lors de son activation électrique provoquant l'entraînement en rotation du rotor, tout en limitant la génération d'efforts et de frottements provoquant du bruit et une perte de rendement du réducteur.

A cet égard, la présente invention vise, selon un premier aspect, un actionneur électromécanique d'un dispositif d'occultation,
l'actionneur électromécanique comprenant au moins :
   - un carter,
   - un moteur électrique,
   - un réducteur, et
   - un dispositif de transmission de couple, le dispositif de transmission de couple comprenant au moins un organe monobloc,
le moteur électrique comprenant au moins :
   - un rotor, et
   - un stator,
le réducteur comprenant au moins :
   - un arbre d'entrée, et
   - un arbre de sortie,
l'arbre d'entrée du réducteur étant accouplé avec le rotor du moteur électrique par l'intermédiaire d'au moins le dispositif de transmission de couple,
le moteur électrique, le réducteur et le dispositif de transmission de couple étant logés à l'intérieur du carter,
l'organe monobloc comprenant au moins :
   - une première partie,
   - une deuxième partie,
   - une pluralité de premières poutres, chacune des premières poutres s'étendant à partir de la première partie,
   - une pluralité de deuxièmes poutres, chacune des deuxièmes poutres s'étendant à partir de la deuxième partie, et
   - une pluralité de bras, chaque bras s'étendant, d'une part, à partir de l'une des premières poutres et, d'autre part, à partir de l'une des deuxièmes poutres.

Selon l'invention, chaque bras est incliné, d'une part, par rapport à l'une des premières poutres d'une première valeur d'inclinaison comprise entre 25° et 65° et, d'autre part, par rapport à l'une des deuxièmes poutres d'une deuxième valeur d'inclinaison comprise entre 25° et 65°.

Ainsi, un tel dispositif de transmission de couple permet de rattraper un ou plusieurs désalignements axiaux, radiaux et/ou angulaires entre le rotor du moteur électrique et l'arbre d'entrée du réducteur, de sorte à transmettre un couple fourni par le moteur électrique, lors de son activation électrique provoquant l'entraînement en rotation du rotor, tout en limitant la génération d'efforts et de frottements provoquant du bruit et une perte de rendement du réducteur.

De cette manière, les bras sont configurés pour se déformer élastiquement par rapport aux premières et deuxièmes poutres, de sorte que l'organe monobloc du dispositif de transmission de couple rattrape un ou plusieurs désalignements entre le rotor du moteur électrique et l'arbre d'entrée du réducteur, en particulier lors de l'activation électrique du moteur électrique provoquant l'entraînement en rotation du rotor.

En outre, les valeurs des bornes inférieure et supérieure des plages de valeurs des première et deuxième valeurs d'inclinaison permettent d'éviter que les bras soient trop rigides, voire cassants, par rapport au premières et deuxièmes poutres.

Selon une caractéristique avantageuse de l'invention, les première et deuxième valeurs d'inclinaison sont chacune de l'ordre de 45°.

Selon une autre caractéristique avantageuse de l'invention, chacune des premières et deuxièmes poutres présente une section en forme de trapèze isocèle, dont :
- une première base relie la première poutre à la première partie de l'organe monobloc, respectivement relie la deuxième poutre à la deuxième partie de l'organe monobloc, et
- une deuxième base relie la première poutre, respectivement la deuxième poutre, à deux des bras de l'organe monobloc, la première base étant plus étendue que la deuxième base.

Selon une autre caractéristique avantageuse de l'invention, les bras sont plus souples que les premières et deuxièmes poutres entre 1 et 9 fois.

Selon une autre caractéristique avantageuse de l'invention, l'organe monobloc comprend quatre premières et deuxièmes poutres réparties angulairement à 90° l'une par rapport à l'autre autour d'un axe longitudinal et quatre bras répartis angulairement à 90° l'un par rapport à l'autre autour de l'axe longitudinal. Les premières et deuxièmes poutres comprennent deux premières poutres et deux deuxièmes poutres. En outre, les premières et deuxièmes poutres sont réparties alternativement entre les premières poutres et les deuxièmes poutres autour de l'axe longitudinal.

Selon une autre caractéristique avantageuse de l'invention, le rotor du moteur électrique comprend au moins un arbre. En outre, la première partie de l'organe monobloc comprend un premier logement, le premier logement recevant une partie de l'arbre du rotor du moteur électrique.

Selon une autre caractéristique avantageuse de l'invention, le premier logement de la première partie de l'organe monobloc présente une première forme, la première forme étant une forme de croix. Ladite partie de l'arbre du rotor présente une deuxième forme, la deuxième forme étant une forme de méplat. En outre, la deuxième forme de ladite partie de l'arbre du rotor est insérée à l'intérieur de la première forme du premier logement de la première partie de l'organe monobloc.

Selon une autre caractéristique avantageuse de l'invention, le réducteur comprend au moins un étage de réduction, l'étage de réduction étant de type épicycloïdal.

L'étage de réduction comprend au moins :
- un pignon solaire, le pignon solaire formant l'arbre d'entrée du réducteur, et
- une pluralité de pignons satellites.

En outre, la deuxième partie de l'organe monobloc comprend un deuxième logement, le deuxième logement recevant une partie du pignon solaire de l'étage de réduction.

Selon une autre caractéristique avantageuse de l'invention, le dispositif de transmission de couple comprend, en outre, un élément d'accouplement. L'élément d'accouplement est assemblé à l'intérieur du deuxième logement de la deuxième partie de l'organe monobloc. Le pignon solaire de l'étage de réduction comprend un arbre. En outre, l'élément d'accouplement est assemblé sur l'arbre du pignon solaire.

La présente invention vise, selon un deuxième aspect, un dispositif d'occultation,
le dispositif d'occultation comprenant au moins :
- un écran, et
- un actionneur électromécanique conforme à l'invention et tel que mentionné ci-dessus, l'écran étant entraîné en déplacement par l'actionneur électromécanique.

Ce dispositif d'occultation présente des caractéristiques et avantages analogues à ceux décrits précédemment, en relation avec l'actionneur électromécanique selon l'invention.

D'autres particularités et avantages de l'invention apparaîtront encore dans la description ci-après, faite en référence aux dessins annexés, donnés à titre d'exemples non limitatifs et dans lesquels :
- la figure 1 est une vue schématique en coupe transversale d'une installation comprenant un dispositif d'occultation conforme à un mode de réalisation de l'invention ;
- la figure 2 est une vue schématique en perspective de l'installation illustrée à la figure 1 ;
- la figure 3 est une vue schématique en perspective d'un dispositif d'entraînement motorisé de l'installation illustrée aux figures 1 et 2, ce dispositif d'entraînement motorisé comprenant un actionneur électromécanique conforme à l'invention et un tube d'enroulement :
- la figure 4 est une vue schématique en coupe de l'actionneur électromécanique illustré à la figure 3, selon un plan de coupe passant par un axe de rotation d'un arbre de sortie de l'actionneur électromécanique, cette vue schématique en coupe étant interrompue localement ;
- la figure 5 est une vue schématique en perspective et éclatée d'une partie de l'actionneur électromécanique illustré à la figure 4 ;
- la figure 6 est une vue schématique en perspective d'un dispositif de transmission de couple, visible sur les figures 4 et 5, de l'actionneur électromécanique illustré aux figures 3 à 5, où un organe monobloc et un élément d'accouplement sont illustrés ;
- la figure 7 est une vue schématique en coupe axiale du dispositif de transmission de couple illustré aux figures 4 à 6 ;
- la figure 8 est une première vue schématique de face de l'organe monobloc illustré aux figures 4 à 7, selon un premier angle de vue autour d'un axe longitudinal de l'organe monobloc ;
- la figure 9 est une deuxième vue schématique de face de l'organe monobloc illustré aux figures 4 à 8, selon un deuxième angle de vue autour de l'axe longitudinal de l'organe monobloc différent du premier angle de vue de la figure 8 ;
- la figure 10 est une première vue schématique en perspective de l'organe monobloc illustré aux figures 4 à 9, selon un troisième angle de vue ; et
- la figure 11 est une deuxième vue schématique en perspective de l'organe monobloc illustré aux figures 4 à 10, selon un quatrième angle de vue différent du troisième angle de vue de la figure 10.

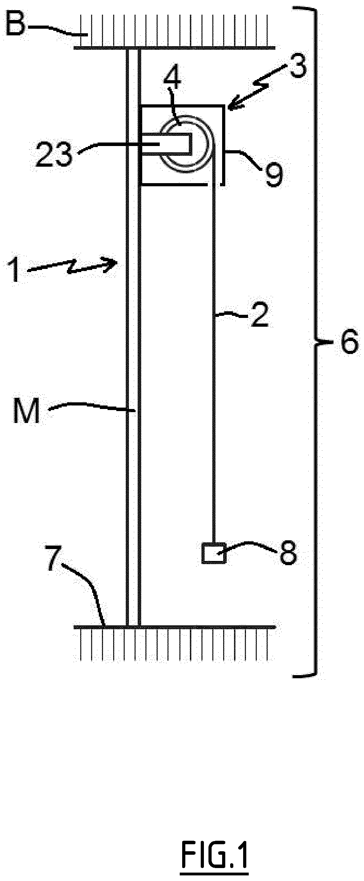

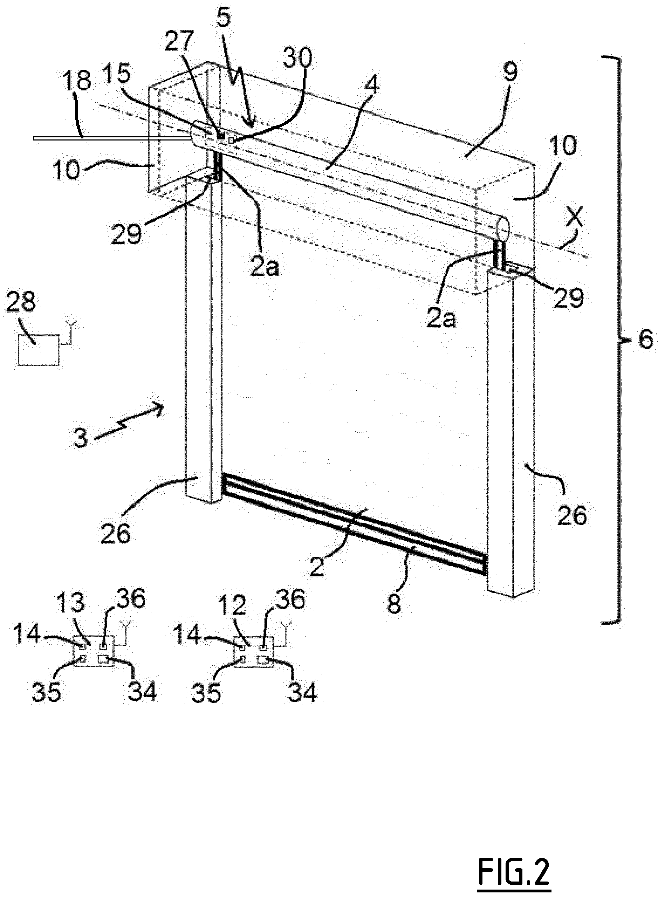

On décrit tout d'abord, en référence aux figures 1 et 2, une installation 6 comprenant un dispositif de fermeture, d'occultation ou de protection solaire 3 conforme à un mode de réalisation de l'invention. Cette installation 6, installée dans un bâtiment B, comporte une ouverture 1, dans laquelle est disposée une fenêtre ou une porte, non représentée. Cette installation 6 est équipée d'un écran 2 appartenant au dispositif de fermeture, d'occultation ou de protection solaire 3, en particulier un store motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un store, notamment un store comprenant une toile enroulable ou un store avec des lames orientables, ou un volet roulant. La présente invention s'applique à tous les types de dispositif d'occultation.

Ici, l'installation 6 comprend le dispositif d'occultation 3.

On décrit, en référence aux figures 1 et 2, un store enroulable conforme à un mode de réalisation de l'invention.

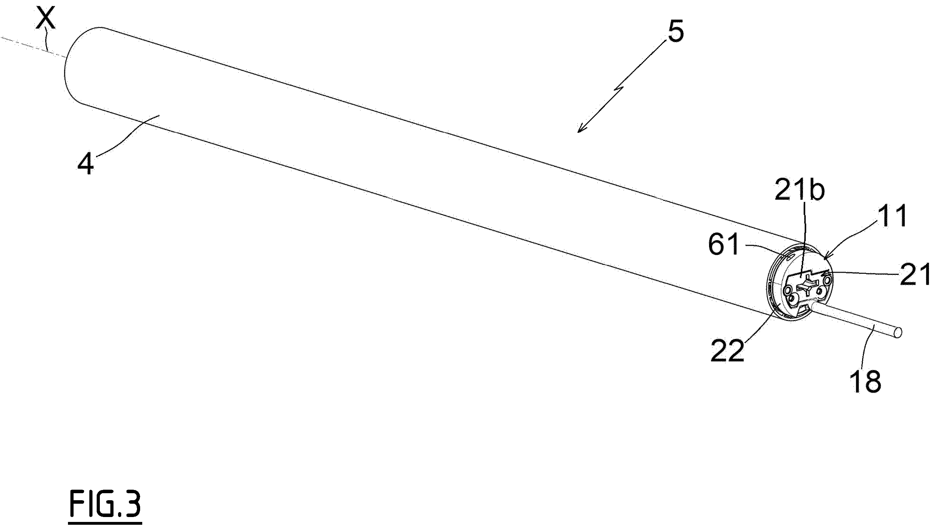

Le dispositif d'occultation 3 comprend un dispositif d'entraînement motorisé 5. Le dispositif d'entraînement motorisé 5 comprend un actionneur électromécanique 11 illustré aux figures 3 à 5.

L'écran 2 est configuré pour être déplacé, autrement dit est déplacé, au moyen du dispositif d'entraînement motorisé 5 et, plus particulièrement, de l'actionneur électromécanique 11.

Avantageusement, le dispositif d'entraînement motorisé 5 et, par conséquent, le dispositif d'occultation 3 comprend, en outre, un tube d'enroulement 4. En outre, le tube d'enroulement 4 est agencé de sorte à être entraîné en rotation par l'actionneur électromécanique 11.

Ici, l'écran 2 est enroulable sur le tube d'enroulement 4.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

Avantageusement, le dispositif d'occultation 3 comprend un dispositif de maintien 9, 23.

Avantageusement, le dispositif de maintien 9, 23 peut comprendre deux supports 23. Un support 23 est disposé à chaque extrémité du tube d'enroulement 4, en particulier dans une configuration assemblée du dispositif d'occultation 3.

Ainsi, le tube d'enroulement 4 est maintenu par l'intermédiaire des supports 23. Un seul des supports 23 est visible à la figure 1 et ceux-ci ne sont pas représentés à la figure 2. Les supports 23 permettent de lier mécaniquement le dispositif d'occultation 3 à la structure du bâtiment B, notamment à un mur M du bâtiment B.

Avantageusement, le dispositif de maintien 9, 23 peut comprendre un caisson 9. En outre, le tube d'enroulement 4 et au moins une partie de l'écran 2 sont logés à l'intérieur du caisson 9, en particulier dans la configuration assemblée du dispositif d'occultation 3.

De manière générale, le caisson 9 est disposé au-dessus de l'ouverture 1, ou encore en partie supérieure de l'ouverture 1.

Ici et comme illustré à la figure 1, les supports 23 sont également logés à l'intérieur du caisson 9.

Avantageusement, le caisson 9 comprend deux joues 10, telles qu'illustrées à la figure 2. Une joue 10 est disposée à chaque extrémité du caisson 9, en particulier dans la configuration assemblée du dispositif d'occultation 3.

En variante, représentée à la figure 2, le tube d'enroulement 4 est maintenu par l'intermédiaire du caisson 9, en particulier par l'intermédiaire des joues 10 du caisson 9, sans utiliser des supports, tels que les supports 23 mentionnés ci-dessus.

Avantageusement, le dispositif d'occultation 3 peut également comprendre deux coulisses latérales 26, comme illustré uniquement à la figure 2. Chaque coulisse latérale 26 comprend une gorge 29. Chaque gorge 29 de l'une des coulisses latérales 26 coopère, autrement dit est configurée pour coopérer, avec un bord latéral 2a de l'écran 2, en particulier dans la configuration assemblée du dispositif d'occultation 3, de sorte à guider l'écran 2, lors de l'enroulement et du déroulement de l'écran 2 autour du tube d'enroulement 4.

L'actionneur électromécanique 11 est, par exemple, de type tubulaire. Celui-ci permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

Avantageusement, le dispositif d'occultation 3 comprend, en outre, une barre de charge 8 pour exercer une tension sur l'écran 2.

Le store enroulable, qui forme le dispositif d'occultation 3, comporte une toile, formant l'écran 2 du store enroulable 3. Une première extrémité de l'écran 2, en particulier l'extrémité supérieure de l'écran 2, dans la configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

Ici, la toile formant l'écran 2 est réalisée à partir d'un matériau textile.

Dans un exemple de réalisation, non représenté, la première extrémité de l'écran 2 présente un ourlet au travers duquel est disposée une tige, en particulier en matière plastique. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure ménagée sur la face externe du tube d'enroulement 4, en particulier sur toute la longueur du tube d'enroulement 4, de sorte à solidariser l'écran 2 avec le tube d'enroulement 4 et à pouvoir enrouler et dérouler l'écran 2 autour du tube d'enroulement 4.

Quel que soit le mode de réalisation, la première extrémité de l'écran 2 est disposée au niveau du dispositif de maintien 9, 23.

Dans le cas d'un store enroulable, la position haute enroulée correspond à une position de fin de course haute prédéterminée, ou encore à la mise en appui de la barre de charge 8 de l'écran 2 contre un bord du caisson 9 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment B.

Le dispositif d'entraînement motorisé 5 est, de préférence, configuré pour exécuter les commandes de déplacement, notamment de déroulement ou d'enroulement, de l'écran 2 du dispositif d'occultation 3, pouvant être émises, notamment, par l'unité de commande locale 12 ou l'unité de commande centrale 13.

L'installation 6 comprend soit l'unité de commande locale 12, soit l'unité de commande centrale 13, soit l'unité de commande locale 12 et l'unité de commande centrale 13.

On décrit à présent, plus en détail et en référence aux figures 3 à 5, le dispositif d'entraînement motorisé 5, y compris l'actionneur électromécanique 11, appartenant à l'installation 6 et, plus particulièrement, au dispositif d'occultation 3 illustré aux figures 1 et 2.

L'actionneur électromécanique 11 comprend un carter 17, en particulier tubulaire, un moteur électrique 16 et un réducteur 19.

Le moteur électrique 16 et le réducteur 19 sont logés, autrement dit sont montés, à l'intérieur du carter 17, en particulier dans une configuration assemblée de l'actionneur électromécanique 11.

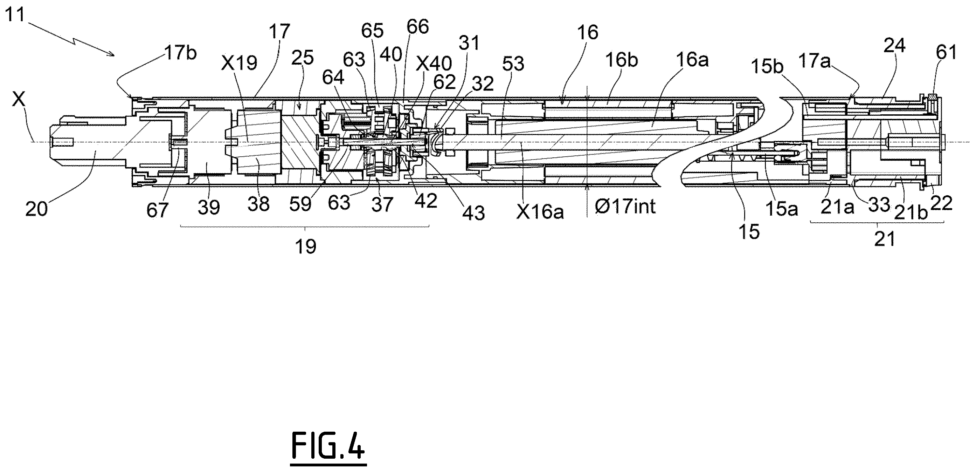

Le moteur électrique 16 comprend un rotor 16a et un stator 16b, comme illustré à la figure 4.

Ici, le rotor 16a et le stator 16b sont positionnés de manière coaxiale autour de l'axe de rotation X, qui est également l'axe de rotation du tube d'enroulement 4 en configuration montée du dispositif d'entraînement motorisé 5.

Avantageusement, le moteur électrique 16 peut être de type sans balais à commutation électronique, appelé également « BLDC » (acronyme du terme anglo-saxon BrushLess Direct Current) ou « synchrone à aimants permanents », de type à courant continu ou de type asynchrone.

Avantageusement, le rotor 16a du moteur électrique 16 comprend un arbre 53.

Ici, le carter 17 est creux. Le carter 17 comprend une première extrémité 17a et une deuxième extrémité 17b. La deuxième extrémité 17b est opposée à la première extrémité 17a.

Ici, le carter 17 de l'actionneur électromécanique 11 est de forme cylindrique, notamment de révolution autour de l'axe de rotation X, et est ouvert à chacune de ses extrémités 17a, 17b.

Avantageusement, le carter 17 est un tube présentant une section circulaire.

Ici, le carter 17 est réalisé dans un matériau métallique.

La matière du carter de l'actionneur électromécanique n'est pas limitative et peut être différente. Il peut s'agir, en particulier, d'une matière plastique.

Des moyens de commande de l'actionneur électromécanique 11, permettant le déplacement de l'écran 2 du dispositif d'occultation 3, sont constitués par au moins une unité de contrôle 15, en particulier une unité électronique de contrôle.

Cette unité de contrôle 15 appartient au dispositif d'entraînement motorisé 5 et, plus particulièrement, à l'actionneur électromécanique 11 et est apte à mettre en fonctionnement le moteur électrique 16 de l'actionneur électromécanique 11 et, en particulier, à permettre l'alimentation en énergie électrique du moteur électrique 16.

Ainsi, l'unité de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 30, comme illustré à la figure 2.

Avantageusement, l'unité de contrôle 15 comprend, en outre, un premier module de communication 27, comme illustré à la figure 2, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité de contrôle 15, l'unité de commande locale 12 et/ou l'unité de commande centrale 13 peuvent être en communication avec une station météorologique disposée à l'intérieur du bâtiment B ou déportée à l'extérieur du bâtiment B, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment B.

Avantageusement, l'unité de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité de contrôle 15 peut être commandée à partir de l'unité de commande locale 12 et/ou de l'unité de commande centrale 13. L'unité de commande locale 12 et/ou l'unité de commande centrale 13 est pourvue d'un clavier de commande. Le clavier de commande de l'unité de commande locale 12 ou de l'unité de commande centrale 13 comprend un ou plusieurs éléments de sélection 14 et, éventuellement, un ou plusieurs éléments d'affichage 34.

A titre d'exemples nullement limitatifs, les éléments de sélection peuvent être des boutons poussoirs et/ou des touches sensitives. Les éléments d'affichage peuvent être des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou l'unité de commande centrale 13 comprend au moins un deuxième module de communication 36.

Ainsi, le deuxième module de communication 36 de l'unité de commande locale 12 ou de l'unité de commande centrale 13 est configuré pour émettre, autrement dit émet, des ordres de commande, en particulier par des moyens sans fil, par exemple radioélectriques, et/ou par des moyens filaires.

En outre, le deuxième module de communication 36 de l'unité de commande locale 12 ou de l'unité de commande centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou de l'unité de commande centrale 13 est configuré pour communiquer, autrement dit communique, avec le premier module de communication 27 de l'unité de contrôle 15.

Ainsi, le deuxième module de communication 36 de l'unité de commande locale 12 ou de l'unité de commande centrale 13 échange des ordres de commande avec le premier module de communication 27 de l'unité de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade du mur M du bâtiment B ou sur une face d'un cadre dormant d'une fenêtre ou d'une porte. Un point de commande nomade peut être une télécommande, un téléphone intelligent ou une tablette.

Avantageusement, l'unité de commande locale 12 et/ou l'unité de commande centrale 13 comprend, en outre, un contrôleur 35.

Le dispositif d'entraînement motorisé 5, en particulier l'unité de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou de l'unité de commande centrale 13.

Le dispositif d'entraînement motorisé 5 peut également être contrôlé automatiquement, par exemple par la réception d'un ordre de commande correspondant à au moins un signal provenant d'au moins un capteur, non représenté, et/ou à un signal provenant d'une horloge, non représentée, de l'unité de contrôle 15, en particulier du microcontrôleur 30. Le capteur et/ou l'horloge peuvent être intégrés, en variante, à l'unité de commande locale 12 ou à l'unité de commande centrale 13.

Avantageusement, l'actionneur électromécanique 11 comprend, en outre, une couronne 24, pouvant également être appelée manchon, comme illustré à la figure 4.

La couronne 24 est disposée, autrement dit est configurée pour être disposée, au voisinage de la première extrémité 17a du carter 17, en particulier dans la configuration assemblée de l'actionneur électromécanique 11.

Avantageusement, le dispositif d'entraînement motorisé 5 et, plus particulièrement, l'actionneur électromécanique 11 comprend, en outre, un câble d'alimentation électrique 18, comme illustré à la figure 2.

Avantageusement, l'unité de contrôle 15 peut être alimentée en énergie électrique au moyen du câble d'alimentation électrique 18 connecté électriquement à au moins une source d'alimentation en énergie électrique, non représentée, pouvant être, par exemple, un réseau d'alimentation en énergie électrique, notamment du secteur ou dit « PoE » (acronyme du terme anglo-saxon Power over Ethernet), et/ou à une batterie, qui peut être rechargeable, notamment au moyen d'un panneau photovoltaïque et/ou d'un chargeur, non représenté, ou au travers du réseau d'alimentation en énergie électrique.

Ainsi, le câble d'alimentation électrique 18 permet une alimentation en énergie électrique de l'actionneur électromécanique 11, en particulier de l'unité de contrôle 15 et du moteur électrique 16, à partir de la ou des sources d'alimentation en énergie électrique.

Avantageusement, l'actionneur électromécanique 11 comprend, en outre, un arbre de sortie 20. En outre, l'arbre de sortie 20 de l'actionneur électromécanique 11 est disposé, autrement dit est configuré pour être disposé, au voisinage de la deuxième extrémité 17b du carter 17, en particulier dans la configuration assemblée de l'actionneur électromécanique 11.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, une extrémité de l'arbre de sortie 20 de l'actionneur électromécanique 11 est en saillie par rapport au carter 17 de l'actionneur électromécanique 11, en particulier par rapport à la deuxième extrémité 17b du carter 17 opposée à la première extrémité 17a.

Avantageusement, l'arbre de sortie 20 de l'actionneur électromécanique 11 est configuré pour entraîner en rotation un élément de liaison, non représenté, relié au tube d'enroulement 4. L'élément de liaison est, par exemple, réalisé sous la forme d'une roue.

Lors de la mise en fonctionnement de l'actionneur électromécanique 11, le moteur électrique 16 et le réducteur 19 entraînent en rotation l'arbre de sortie 20 de l'actionneur électromécanique 11. En outre, l'arbre de sortie 20 de l'actionneur électromécanique 11 entraîne en rotation le tube d'enroulement 4 par l'intermédiaire de l'élément de liaison.

Ainsi, le tube d'enroulement 4 entraîne en rotation l'écran 2 du dispositif d'occultation 3, de sorte à ouvrir ou fermer l'ouverture 1.

Avantageusement, l'actionneur électromécanique 11 comprend, en outre, un frein 25.

A titre d'exemples nullement limitatifs, le frein 25 peut être un frein à ressort, un frein à came, un frein magnétique ou un frein électromagnétique.

Le frein 25 est configuré pour freiner et/ou pour bloquer en rotation l'arbre de sortie 20 de l'actionneur électromécanique 11, de sorte à réguler la vitesse de rotation du tube d'enroulement 4, lors d'un déplacement de l'écran 2, et à maintenir bloqué le tube d'enroulement 4, lorsque l'actionneur électromécanique 11 est désactivé électriquement.

Avantageusement, le frein 25 est logé, autrement dit est monté, à l'intérieur du carter 17 de l'actionneur électromécanique 11, en particulier dans la configuration assemblée de l'actionneur électromécanique 11.

Avantageusement, le réducteur 19 comprend au moins un étage de réduction 37, 38, 39. Le, l'un des étages de réduction 37, 38, 39 ou chaque étage de réduction 37, 38, 39 est de type épicycloïdal.

Ici et comme illustré à la figure 4, le réducteur 19 comprend trois étages de réduction 37, 38, 39. Chacun des trois étages de réduction 37, 38, 39 est de type épicycloïdal. Les trois étages de réduction 37, 38, 39 sont appelés par la suite premier étage de réduction 37, deuxième étage de réduction 38 et troisième étage de réduction 39.

Le nombre d'étages de réduction du réducteur n'est pas limitatif. Le nombre d'étages de réduction peut être de un, de deux ou supérieur ou égal à quatre.

Ici et comme illustré à la figure 4, le frein 25 est configuré pour être disposé, autrement dit est disposé, entre deux étages 37, 38, 39, en particulier entre le premier étage de réduction 37 et le deuxième étage de réduction 38 du réducteur 19, en particulier dans la configuration assemblée de l'actionneur électromécanique 11.

En variante, non représentée, le frein 25 est configuré pour être disposé, autrement dit est disposé, dans la configuration assemblée de l'actionneur électromécanique 11, entre l'unité de contrôle 15 et le moteur électrique 16, autrement dit à l'entrée du moteur électrique 16, ou entre le réducteur 19 et l'arbre de sortie 20 de l'actionneur électromécanique 11, autrement dit à la sortie du réducteur 19, ou encore entre le moteur électrique 16 et le réducteur 19, c'est-à-dire à la sortie du moteur électrique 16.

Avantageusement, le réducteur 19 comprend une première extrémité 19a et une deuxième extrémité 19b. La deuxième extrémité 19b est opposée à la première extrémité 19a. La première extrémité 19a du réducteur 19 est disposée en face du moteur électrique 16, autrement dit fait face au moteur électrique 16, en particulier dans la configuration assemblée de l'actionneur électromécanique 11. En outre, la deuxième extrémité 19b du réducteur 19 est disposée en face de l'arbre de sortie 20 de l'actionneur électromécanique 11, autrement dit fait face à l'arbre de sortie 20 de l'actionneur électromécanique 11, en particulier dans la configuration assemblée de l'actionneur électromécanique 11

Ici, le premier étage de réduction 37 est disposé au niveau de la première extrémité 19a du réducteur 19. Le troisième étage de réduction 39 est disposé au niveau de la deuxième extrémité 19b du réducteur 19. En outre, le deuxième étage de réduction 38 est disposé entre le premier étage de réduction 37 et le troisième étage de réduction 39.

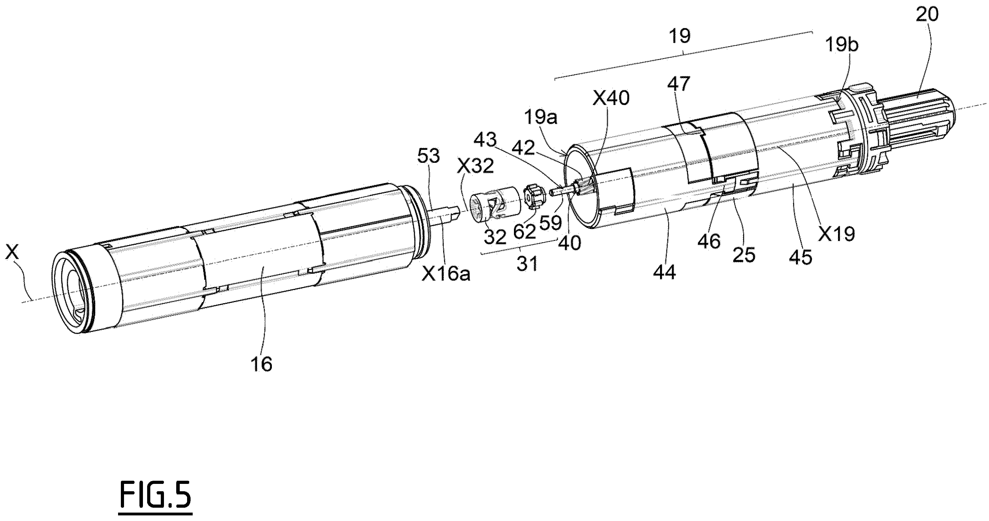

Avantageusement, l'un, en particulier le premier étage de réduction 37, ou chacun des premier, deuxième et troisième étages de réduction 37, 38, 39 comprend un pignon solaire 40 et une pluralité de pignons satellites 63, pouvant être, par exemple, au nombre de trois. Seul le pignon solaire 40 du premier étage de réduction 37 est illustré aux figures 4 et 5 et seuls deux des pignons satellites 63 du premier étage de réduction 37 sont illustrés à la figure 4.

Le pignon solaire 40 et les pignons satellites 63 du premier étage de réduction 37 peuvent être appelés premier pignon solaire et premiers pignons satellites. Le pignon solaire et les pignons satellites du deuxième étage de réduction 38 peuvent être appelés deuxième pignon solaire et deuxièmes pignons satellites. En outre, le pignon solaire et les pignons satellites du troisième étage de réduction 39 peuvent être appelés troisième pignon solaire et troisièmes pignons satellites.

On note X19 un axe de rotation du réducteur 19.

On note X40 un axe de rotation du premier pignon solaire 40.

L'axe de rotation X40 du premier pignon solaire 40 et, en l'occurrence, l'axe de rotation de chaque pignon solaire est confondu avec l'axe de rotation X19 du réducteur 19. Par conséquent, l'axe de rotation X40 et l'axe de rotation X19 sont représentés par un même trait d'axe.

Avantageusement, les pignons satellites du ou de chacun des premier, deuxième et troisième étages de réduction 37, 38, 39 sont régulièrement répartis, autour de l'axe de rotation X19.

Le nombre de pignons satellites de l'un ou de chacun des premier, deuxième et troisième étages de réduction n'est pas limitatif et peut être différent. Le nombre de pignons satellites d'un étage de réduction peut être de deux ou plus.

Avantageusement, le premier pignon solaire 40 du premier étage de réduction 37 comprend une première partie de pignon solaire et une deuxième partie de pignon solaire. La première partie de pignon solaire comprend une première denture 42. En outre, la deuxième partie de pignon solaire comprend une deuxième denture 64.

Avantageusement, la deuxième denture 64 de la deuxième partie de pignon solaire est décalée angulairement d'un demi pas par rapport à la première denture 42 de la première partie de pignon solaire, autour de l'axe de rotation X40 du premier pignon solaire 40.

Par ailleurs, le pignon solaire de chacun des deuxième et troisième étages de réduction 38, 39 peut comprendre une première partie de pignon solaire et une deuxième partie de pignon solaire, pouvant être similaires à celles du premier pignon solaire 40 du premier étage de réduction 37 décrites ci-dessus.

Dans chacun des premier, deuxième et troisième étages de réduction 37, 38, 39, en particulier dans le premier étage de réduction 37, le pignon solaire 40 est engrené, autrement dit est configuré pour être engrené, avec chaque pignon satellite 63 de cet étage de réduction 37, 38, 39, en particulier dans une configuration assemblée du réducteur 19.

Avantageusement, dans chacun des étages premier, deuxième et troisième de réduction 37, 38, 39, en particulier dans le premier étage de réduction 37, les pignons satellites 63 sont identiques, au moins par groupes de pignons satellites d'un étage de réduction 37, 38, 39.

Dans chacun des premier, deuxième et troisième étages de réduction 37, 38, 39, en particulier dans le premier étage de réduction 37, les pignons satellites 63 sont excentrés par rapport à l'axe de rotation X19 du réducteur 19 et, plus particulièrement, par rapport au pignon solaire 40 de cet étage de réduction 37, 38, 39, en particulier dans la configuration assemblée du réducteur 19.

Ainsi, pour un étage de réduction 37, 38, 39 donné, un axe de rotation de chaque pignon satellite 63 est parallèle à, et radialement décalé de, l'axe de rotation X19 du réducteur 19 et, plus particulièrement, parallèle à, et radialement décalé de, l'axe de rotation X40 du pignon solaire 40.

Le réducteur 19 comprend, en outre, un arbre d'entrée 43.

Ici et comme illustré aux figures 4 et 5, le premier pignon solaire 40 du premier étage de réduction 37 constitue l'arbre d'entrée 43 du réducteur 19.

En variante, non représentée, le premier pignon solaire 40 du premier étage de réduction 37 est porté par l'arbre d'entrée 43 du réducteur 19.

Ainsi, quel que soit l'exemple de réalisation, le premier pignon solaire 40 du premier étage de réduction 37 forme l'arbre d'entrée 43 du réducteur 19.

Le réducteur 19 comprend, en outre, un arbre de sortie 67.

Ici, l'arbre de sortie 67 du réducteur 19 est disposé, autrement dit est configuré pour être disposé, à l'intérieur de l'arbre de sortie 20 de l'actionneur électromécanique 11, en particulier dans la configuration assemblée de l'actionneur électromécanique 11.

En variante, non représentée, l'arbre de sortie 20 de l'actionneur électromécanique 11 constitue l'arbre de sortie 67 du réducteur 19.

Avantageusement, l'arbre d'entrée 43 et l'arbre de sortie 67 du réducteur 19 sont coaxiaux, autrement dit sont configurés pour être coaxiaux, en particulier dans la configuration assemblée du réducteur 19.

Ainsi, l'arbre d'entrée 43 et l'arbre de sortie 67 du réducteur 19 sont disposés suivant le même axe de rotation X19, qui est également l'axe de rotation du réducteur 19, en particulier dans la configuration assemblée du réducteur 19.

Avantageusement, le réducteur 19 comprend, en outre, au moins une couronne 65. La ou chacune des couronnes 65 comprend une denture interne. Seule la couronne 65 du premier étage de réduction 37 est illustrée à la figure 4.

Dans un exemple de réalisation, le réducteur 19 comprend deux couronnes.

Dans un premier cas, l'une des deux couronnes est formée par le regroupement d'une deuxième couronne du deuxième étage de réduction 38 avec une troisième couronne du troisième étage de réduction 39. Dans ce cas, les pignons satellites des deuxième et troisième étages de réduction 38, 39 sont engrenés, autrement dit sont configurés pour être engrenés, avec la même couronne, en particulier dans la configuration assemblée du réducteur 19. Dans ce cas, cette unique couronne appartient aux deuxième et troisième étages de réduction 38, 39. En outre, dans ce cas, l'autre des deux couronnes est formée par la première couronne 65 du premier étage de réduction 37.

Dans un deuxième cas, non représenté, l'une des deux couronnes est formée par le regroupement d'une première couronne du premier étage de réduction 37 avec une deuxième couronne du deuxième étage de réduction 38. Dans ce cas, les pignons satellites des premier et deuxième étages de réduction 37, 38 sont engrenés, autrement dit sont configurés pour être engrenés, avec la même couronne, en particulier dans la configuration assemblée du réducteur 19. Dans ce cas, cette unique couronne appartient aux premier et deuxième étages de réduction 37, 38. En outre, dans ce cas, l'autre des deux couronnes est formée par une troisième couronne du troisième étage de réduction 39.

En variante, non représentée, le réducteur 19 comprend trois couronnes. Les trois couronnes peuvent être appelées première couronne 65, deuxième couronne et troisième couronne. Chaque pignon satellite de chacun des premier, deuxième et troisième étages de réduction 37, 38, 39, en particulier du premier étage de réduction 37, est engrené, autrement dit est configuré pour être engrené, avec la couronne, en particulier avec la denture interne de la couronne, de cet étage de réduction 37, 38, 39, en particulier dans la configuration assemblée du réducteur 19. Dans ce cas, les première, deuxième et troisième couronnes appartiennent respectivement à l'un des premier, deuxième et troisième étages de réduction 37, 38, 39.

Dans une autre variante, non représentée, le réducteur 19 comprend une unique couronne. Dans ce cas, les pignons satellites de chacun des premier, deuxième et troisième étages de réduction 37, 38, 39 sont engrenés, autrement dit sont configurés pour être engrenés, avec l'unique couronne, en particulier dans la configuration assemblée du réducteur 19. Dans ce cas, cette unique couronne appartient aux premier, deuxième et troisième étages de réduction 37, 38, 39.

Avantageusement, chacun des premier, deuxième et troisième étages de réduction 37, 38, 39, en particulier le premier étage de réduction 37, comprend, en outre, un porte-satellites 66. Seul le porte-satellites 66 du premier étage de réduction 37 est illustré à la figure 4.

Avantageusement, le porte-satellites, non représenté, du troisième étage de réduction 39 est solidaire de l'arbre de sortie du réducteur 19.

Ainsi, le porte-satellites du troisième étage de réduction 39 est entraîné en rotation, en particulier par l'intermédiaire de l'arbre de sortie du réducteur 19, lorsque l'arbre d'entrée 43 du réducteur 19 est entraîné en rotation, notamment lors d'une activation électrique du moteur électrique 16 provoquant l'entraînement en rotation du rotor 16a.

Dans un exemple de réalisation, le porte-satellites du troisième étage de réduction 39 et l'arbre de sortie du réducteur 19 forment une unique pièce, pouvant être réalisée, par exemple, par frittage. Cette pièce peut être réalisée, notamment, dans une matière plastique ou dans une matière métallique.

En variante, non représentée, le porte-satellites du troisième étage de réduction 39 et l'arbre de sortie du réducteur 19 forment deux pièces distinctes. Dans ce cas, dans la configuration assemblée du réducteur 19, les deux pièces sont reliées, autrement dit sont configurées pour être reliées, ensemble au moyen d'éléments de fixation, pouvant être démontables. A titre d'exemples nullement limitatifs, les éléments de fixation peuvent être du type par encliquetage élastique ou par vissage.

Avantageusement, le réducteur 19 comprend un premier couvercle 44 et un deuxième couvercle 45. Le premier couvercle 44 est disposé au niveau de la première extrémité 19a du réducteur 19. En outre, le deuxième couvercle 45 est disposé au niveau de la deuxième extrémité 19b du réducteur 19.

Dans un exemple de réalisation, le premier couvercle 44 et la couronne 65 du premier étage de réduction 37 forment deux pièces distinctes. En outre, le deuxième couvercle 45 et la couronne du troisième étage de réduction 39 forment deux pièces distinctes. Dans ce cas, dans la configuration assemblée du réducteur 19, les deux pièces sont reliées, autrement dit sont configurées pour être reliées ensemble, soit par emmanchement, soit par surmoulage, soit au moyen d'éléments de fixation, pouvant être démontables. A titre d'exemples nullement limitatifs, les éléments de fixation peuvent être du type par encliquetage élastique ou par vissage.

Ici, le deuxième couvercle 45 et la couronne du deuxième étage de réduction 38 et du troisième étage de réduction 39 forment deux pièces distinctes.

En variante, non représentée, dans la configuration assemblée du réducteur 19, le premier couvercle 44 est intégré à la couronne 65 du premier étage de réduction 37, de sorte à former une unique pièce. En outre, le deuxième couvercle 45 est intégré à la couronne du troisième étage de réduction 39, de sorte à former une unique pièce. Dans ce cas, l'unique pièce peut être réalisée, par exemple, par frittage. Cette pièce peut être réalisée, notamment, dans une matière plastique ou dans une matière métallique.

Avantageusement, dans la configuration assemblée du réducteur 19, le premier couvercle 44 est fixé, autrement dit est configuré pour être fixé, au deuxième couvercle 45, au moyen d'éléments de fixation 46, dont un seul est représenté à la figure 5.

Ici, les éléments de fixation 46 sont des éléments de fixation par encliquetage élastique, au nombre de deux et disposés diamétralement opposés par rapport à l'axe de rotation X19, autrement dit à 180° l'un par rapport à l'autre, autour de l'axe de rotation X19.

Le nombre et le type des éléments de fixation ne sont pas limitatifs et peuvent être différents. Ils peuvent être, par exemple, au nombre de trois et disposés avec un angle de 120° l'un par rapport à l'autre, autour de l'axe de rotation du réducteur. Ils peuvent également être, par exemple, des éléments de fixation par vissage.

Avantageusement, dans la configuration assemblée du réducteur 19, le frein 25 est maintenu, autrement dit est configuré pour être maintenu, par les premier et deuxième couvercles 44, 45, au moyen d'éléments d'indexation 47, dont un seul est visible à la figure 5.

Ici, les éléments d'indexation 47 sont des éléments de blocage en rotation, autour de l'axe de rotation X19, tels que des éléments en saillie coopérant avec des échancrures, au nombre de deux et disposés diamétralement opposés par rapport à l'axe de rotation X19, autrement dit à 180° l'un par rapport à l'autre, autour de l'axe de rotation X19.

Le nombre et le type des éléments de blocage ne sont pas limitatifs et peuvent être différents. Ils peuvent être, par exemple, au nombre de trois et disposés avec un angle de 120° l'un par rapport à l'autre, autour de l'axe de rotation du réducteur.

Avantageusement, le réducteur 19 peut comprendre, en outre, une bague de fixation, non représentée. La bague de fixation est fixée, autrement dit est configurée pour être fixée, au carter 17 de l'actionneur électromécanique 11 au moyen d'au moins un élément de fixation, non représenté.

La bague de fixation peut être fixée au carter 17 au moyen d'une vis de fixation, non représentée, traversant un trou de passage, non représenté, ménagé dans le carter 17 et se vissant dans un trou de fixation de la bague de fixation.

Le nombre et le type des éléments de fixation de la bague de fixation au carter ne sont pas limitatifs. Ils peuvent être, par exemple, au nombre de deux ou plus. Ils peuvent être également, par exemple, des éléments de fixation par rivetage.

Avantageusement, l'actionneur électromécanique 11 comprend, en outre, un dispositif de détection de fin de course et/ou d'obstacle, lors du déplacement de l'écran 2. Ce dispositif peut être mécanique ou électronique.

Avantageusement, le dispositif de détection de fin de course et/ou d'obstacle est mis en oeuvre au moyen du microcontrôleur 30 de l'unité de contrôle 15 et, en particulier, au moyen d'un algorithme mis en oeuvre par ce microcontrôleur 30.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 24. La couronne 24 permet ainsi de réaliser un palier. La deuxième liaison pivot, non représentée, est réalisée au niveau d'une deuxième extrémité du tube d'enroulement 4, opposée à la première extrémité.

La couronne 24 forme, autrement dit est configurée pour former ou constituer, un palier de guidage en rotation du tube d'enroulement 4, autour du carter 17 de l'actionneur électromécanique 11, en particulier dans une configuration assemblée du dispositif d'entraînement motorisé 5 et, par conséquent, du dispositif d'occultation 3.

Avantageusement, l'actionneur électromécanique 11 comprend, en outre, un support de couple 21.

Ici, le support de couple 21 est disposé au niveau de la première extrémité 17a du carter 17 de l'actionneur électromécanique 11, en particulier dans la configuration assemblée de l'actionneur électromécanique 11.

Le support de couple 21 permet de reprendre les efforts exercés par l'actionneur électromécanique 11, en particulier le couple exercé par l'actionneur électromécanique 11, par rapport à la structure du bâtiment B. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment B.

Ainsi, le support de couple 21 permet de fixer l'actionneur électromécanique 11 sur le dispositif de maintien 9, 23, en particulier à l'un des supports 23 ou à l'une des joues 10 du caisson 9.

Avantageusement, le support de couple 21 est en saillie au niveau de la première extrémité 17a du carter 17 de l'actionneur électromécanique 1.

Avantageusement, le support de couple 21 obture, autrement dit est configuré pour obturer, la première extrémité 17a du carter 17, en particulier dans la configuration assemblée de l'actionneur électromécanique 11.

Par ailleurs, le support de couple 21 de l'actionneur électromécanique 11 peut permettre de supporter au moins une partie de l'unité de contrôle 15.

Avantageusement, le support de couple 21 est fixé au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des rainures emmanchées dans des échancrures ou une combinaison de ces différents éléments de fixation.

Avantageusement, le support de couple 21 comprend une première partie 21a, pouvant également être appelée « point fixe », et une deuxième partie 21b, pouvant également être appelée « tête d'actionneur ».

Avantageusement, la première partie 21a du support de couple 21 est assemblée, autrement dit est configurée pour être assemblée, avec le carter 17, en particulier dans la configuration assemblée de l'actionneur électromécanique 11. En outre, la deuxième partie 21b du support de couple 21 est configurée pour être assemblée, autrement dit est assemblée, avec le dispositif de maintien 9, 23, en particulier dans une configuration assemblée de l'actionneur électromécanique 11 dans le dispositif d'occultation 3.

Dans un exemple de réalisation, la deuxième partie 21b du support de couple 21 est assemblée, autrement dit est configurée pour être assemblée, sur la première partie 21a du support de couple 21, en particulier dans la configuration assemblée de l'actionneur électromécanique 11. Dans ce cas, la deuxième partie 21b du support de couple 21 est assemblée sur la première partie 21a du support de couple 21 au moyen d'éléments d'assemblage.

Ainsi, le support de couple 21 est constitué d'au moins deux pièces distinctes formant chacune respectivement les première et deuxième parties 21a, 21b du support de couple 21.

De cette manière, la deuxième partie 21b du support de couple 21 peut être interchangeable par rapport à la première partie 21a du support de couple 21, notamment en fonction de la forme et du type des éléments de maintien, non représentés, du dispositif de maintien 9, 23.

Dans un autre exemple de réalisation, le support de couple 21 peut être constitué d'une seule pièce formant les première et deuxième parties 21a, 21b du support de couple 21.

Avantageusement, la deuxième partie 21b du support de couple 21 peut présenter différentes formes, notamment une forme cannelée, dite « en étoile », autrement dit comprenant des reliefs sur son contour, ou une forme ronde, autrement dit dépourvue de reliefs sur son contour, comme illustrée aux figures 3 et 4.

Avantageusement, au moins une portion de la première partie 21a du support de couple 21 est de forme générale cylindrique et est disposée, autrement dit est configurée pour être disposée, à l'intérieur du carter 17, en particulier dans la configuration assemblée de l'actionneur électromécanique 11.

Avantageusement, un diamètre extérieur d'au moins une portion de la deuxième partie 21b du support de couple 21 est supérieur à un diamètre extérieur du carter 17.

Avantageusement, le support de couple 21 comprend, en outre, une butée 33. En outre, la butée 33 est en appui, autrement dit est configurée pour être en appui, contre le carter 17, au niveau de la première extrémité 17a du carter 17, en particulier dans la configuration assemblée de l'actionneur électromécanique 11.

Ainsi, la butée 33 du support de couple 21 permet de limiter l'enfoncement de la première partie 21a du support de couple 21 dans le carter 17, suivant la direction de l'axe de rotation X.

Ici, la butée 33 du support de couple 21 comprend un épaulement. Plus particulièrement, elle est réalisée sous la forme d'une collerette, en particulier de forme cylindrique et à génératrice rectiligne.

Ici et comme illustré à la figure 4, la couronne 24 est disposée ou insérée, autrement dit est configurée pour être disposée ou insérée, autour du support de couple 21, en particulier de la deuxième partie 21b du support de couple 21, notamment dans la configuration assemblée de l'actionneur électromécanique 11. Dans ce cas, la couronne 24 est montée libre en rotation autour du support de couple 21, en particulier de la deuxième partie 21b du support de couple 21.

En variante, non représentée, la couronne 24 est disposée ou insérée, autrement dit est configurée pour être disposée ou insérée, autour d'une partie du carter 17, en particulier dans la configuration assemblée de l'actionneur électromécanique 11. Dans ce cas, la couronne 24 est montée libre en rotation autour du carter 17.

Dans une autre variante, non représentée, la couronne 24 est disposée ou insérée, autrement dit est configurée pour être disposée ou insérée, d'une part, autour du support de couple 21 et, d'autre part, autour d'une partie du carter 17 de l'actionneur électromécanique 11, en particulier de la première extrémité 17a du carter 17, notamment dans la configuration assemblée de l'actionneur électromécanique 11. Dans un tel cas, la couronne 24 peut être montée libre en rotation, d'une part, autour du support de couple 21 et, d'autre part, autour du carter 17 de l'actionneur électromécanique 11.

Avantageusement, le support de couple 21 comprend, en outre, un couvercle 22. Le couvercle 22 est monté, autrement dit est configuré pour être monté, sur le support de couple 21, notamment sur les première et/ou deuxième parties 21a, 21b du support de couple 21, en particulier dans la configuration assemblée de l'actionneur électromécanique 11.

Avantageusement, l'unité de contrôle 15 est disposée au moins en partie à l'intérieur du carter 17 de l'actionneur électromécanique 11.

Par ailleurs, l'unité de contrôle 15 peut être disposée au moins en partie à l'extérieur du carter 17 de l'actionneur électromécanique 11 et, en particulier, montée dans le support de couple 21 ou dans l'un des supports 23.

Avantageusement, l'unité de contrôle 15 comprend une première carte électronique 15a et une deuxième carte électronique 15b, comme illustré à la figure 4.

Ici, la première carte électronique 15a de l'unité de contrôle 15 est disposée à l'intérieur du carter 17 de l'actionneur électromécanique 11, en particulier dans la configuration assemblée de l'actionneur électromécanique 11. En outre, la deuxième carte électronique 15b est disposée à l'intérieur du support de couple 21 de l'actionneur électromécanique 11, en particulier dans la configuration assemblée de l'actionneur électromécanique 11.

Avantageusement, la première carte électronique 15a est configurée pour contrôler le moteur électrique 16. En outre, la deuxième carte électronique 15b est configurée pour, notamment, accéder à des fonctions de paramétrage et/ou de configuration de l'actionneur électromécanique 11, au moyen de dispositifs de sélection 61, dont un seul est représenté aux figures 3 et 4, et, éventuellement, d'affichage, non représentés.

Ici, l'unité de contrôle 15, en particulier chacune des première et deuxième cartes électroniques 15a, 15b, est alimentée en énergie électrique au moyen du câble d'alimentation électrique 18.

Avantageusement, le support de couple 21 comprend, autrement dit intègre, au moins un dispositif de sélection 61, en particulier un bouton, pouvant être, par exemple, de type poussoir ou magnétique. En outre, le ou chaque dispositif de sélection 61 est configuré, notamment, pour réaliser un réglage de l'actionneur électromécanique 11 au travers d'un ou plusieurs modes de configuration, pour appairer avec l'actionneur électromécanique 11 une ou plusieurs unités de commande 12, 13, pour réinitialiser un ou plusieurs paramètres, pouvant être, par exemple, une position de fin de course, pour réinitialiser la ou les unités de commande 12, 13 appairées ou encore pour commander le déplacement de l'écran 2.

Avantageusement, le support de couple 21 comprend, autrement dit intègre, au moins un dispositif d'affichage, non représenté. En outre, le ou chaque dispositif d'affichage est configuré, notamment, pour afficher une indication visuelle, pouvant être, par exemple, représentative d'un mode de fonctionnement de l'actionneur électromécanique 11, en particulier un mode de configuration ou un mode de commande, ou encore d'un état d'un organe du dispositif d'entraînement motorisé 5.

L'actionneur électromécanique 11 comprend, en outre, un dispositif de transmission de couple 31. Le dispositif de transmission de couple 31 comprend un organe monobloc 32.

Le dispositif de transmission de couple 31 est logé, autrement dit est monté, à l'intérieur du carter 17 de l'actionneur électromécanique 11, en particulier dans la configuration assemblée de l'actionneur électromécanique 11.

Ici, l'arbre d'entrée 43 du réducteur 19 est accouplé, autrement dit est configuré pour être accouplé, avec le rotor 16a du moteur électrique 16 par l'intermédiaire du dispositif de transmission de couple 31, en particulier dans la configuration assemblée de l'actionneur électromécanique 11.

En variante, non représentée, dans le cas où le frein 25 est disposé entre le moteur électrique 16 et le réducteur 19, l'arbre d'entrée 43 du réducteur 19 est accouplé, autrement dit est configuré pour être accouplé, avec le rotor 16a du moteur électrique 16 par l'intermédiaire du dispositif de transmission de couple 31 et du frein 25, en particulier dans la configuration assemblée de l'actionneur électromécanique 11.

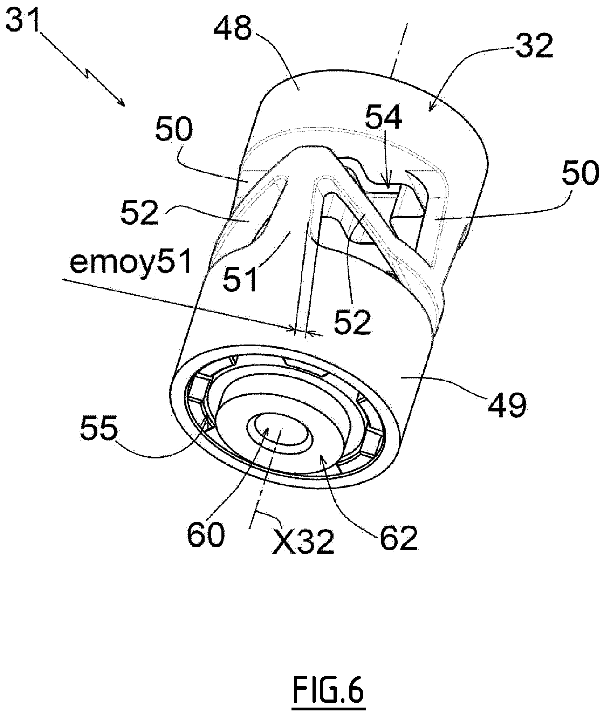

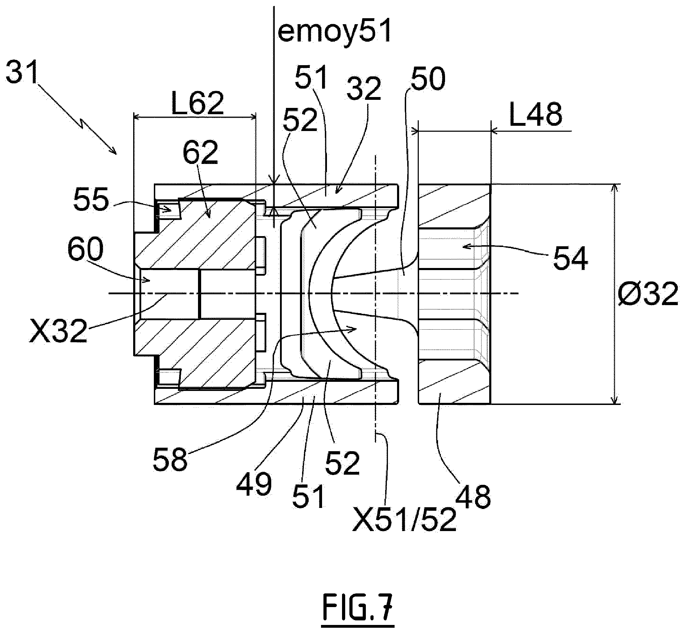

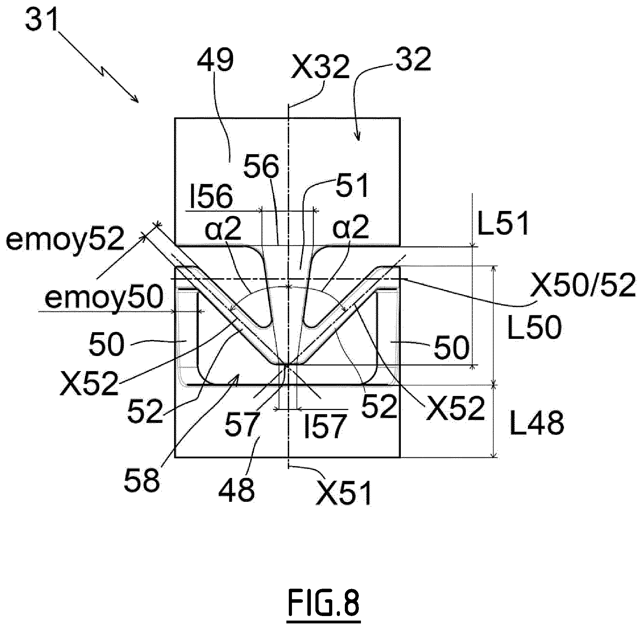

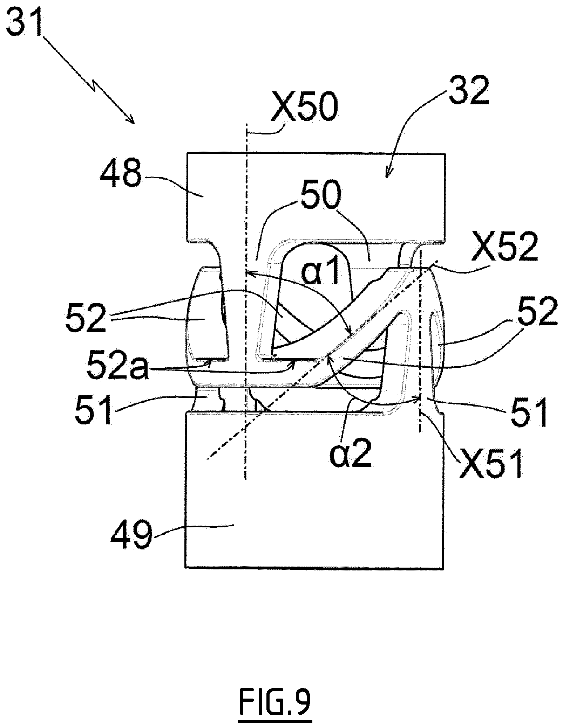

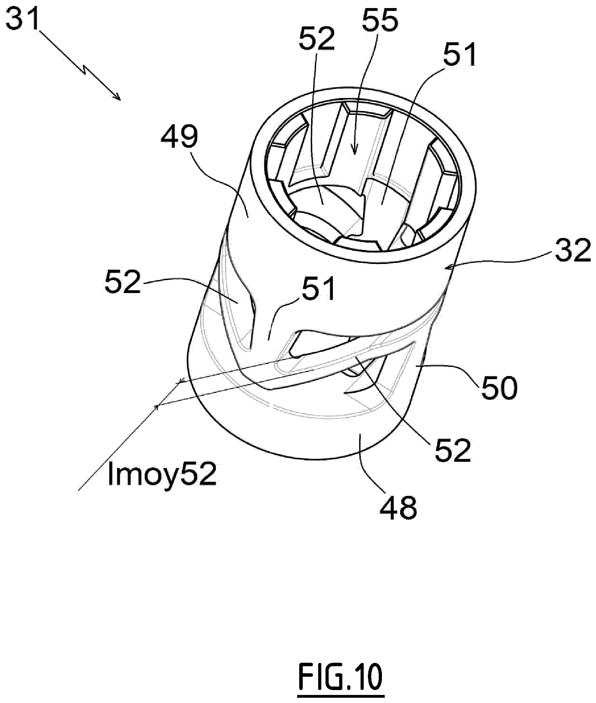

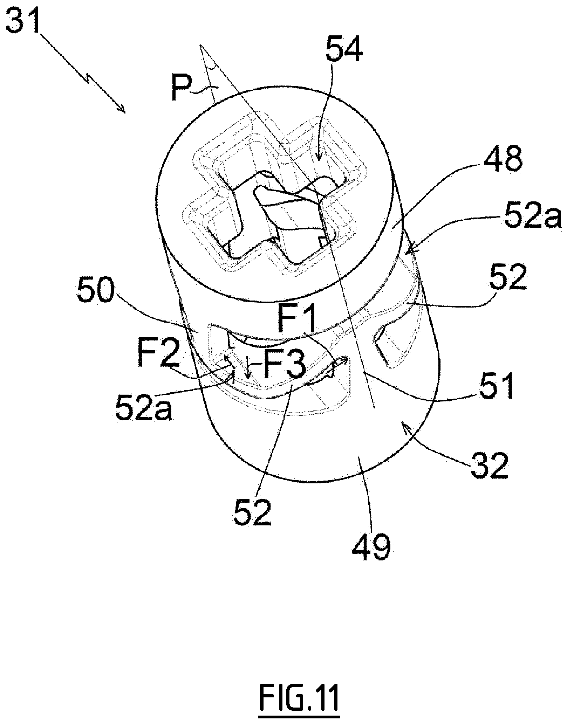

On décrit à présent, en référence aux figures 4 à 11, le dispositif de transmission de couple 31 de l'actionneur électromécanique 11, illustré aux figures 3 et 4 et conforme à un mode de réalisation de l'invention.

On note X32 un axe longitudinal de l'organe monobloc 32.

L'organe monobloc 32 comprend une première partie 48, une deuxième partie 49, une pluralité de premières poutres 50, une pluralité de deuxièmes poutres 51 et une pluralité de bras 52.

L'organe monobloc 32 peut également être appelé cardan. Les bras 52 peuvent également être appelés éléments flexibles. En outre, les premières et deuxièmes poutres 50, 51 peuvent également être appelées premiers et deuxièmes éléments de rigidification.

Chacune des premières poutres 50 est reliée à la première partie 48, autrement dit s'étend à partir de cette première partie 48. Chacune des deuxièmes poutres 51 est reliée à la deuxième partie 49, autrement dit s'étend à partir de cette deuxième partie 49. Chaque bras 52 est relié, d'une part, à l'une des premières poutres 50, autrement dit s'étend à partir de l'une des premières poutres 50, et est relié, d'autre part, à l'une des deuxièmes poutres 51, autrement dit s'étend à partir de l'une des deuxièmes poutres 51.

Chaque bras 52 est incliné, d'une part, par rapport à l'une des premières poutres 50 d'une première valeur d'inclinaison α1 comprise entre 25° et 65° et, d'autre part, par rapport à l'une des deuxièmes poutres 51 d'une deuxième valeur d'inclinaison α2 comprise entre 25° et 65°.

Ici, la première valeur d'inclinaison α1 entre l'un des bras 52 et l'une des premières poutres 50, à partir de laquelle le bras 52 considéré s'étend, est mesurée entre un axe central X52 dudit bras 52 et un axe central X50 de ladite première poutre 50. De même, la deuxième valeur d'inclinaison α2 entre l'un des bras 52 et l'une des deuxièmes poutres 51, à partir de laquelle le bras 52 considéré s'étend, est mesurée entre l'axe central X52 dudit bras 52 et un axe central X51 de ladite deuxième poutre 51.

Ainsi, le dispositif de transmission de couple 31 permet de rattraper un ou plusieurs désalignements axiaux, radiaux et/ou angulaires entre le rotor 16a du moteur électrique 16 et l'arbre d'entrée 43 du réducteur 19, de sorte à transmettre le couple fourni par le moteur électrique 16, lors de son activation électrique provoquant l'entraînement en rotation du rotor 16a, tout en limitant la génération d'efforts et de frottements provoquant du bruit et une perte de rendement du réducteur 19.

De cette manière, les bras 52 sont configurés pour se déformer élastiquement par rapport aux premières et deuxièmes poutres 50, 51, de sorte que l'organe monobloc 32 du dispositif de transmission de couple 31 rattrape un ou plusieurs désalignements entre le rotor 16a du moteur électrique 16 et l'arbre d'entrée 43 du réducteur 19, en particulier lors de l'activation électrique du moteur électrique 16 provoquant l'entraînement en rotation du rotor 16a.

En outre, les valeurs des bornes inférieure et supérieure des plages de valeurs des première et deuxième valeurs d'inclinaison α1, α2 permettent d'éviter que les bras 52 soient trop rigides, voire cassants, par rapport aux premières et deuxièmes poutres 50, 51.

Autrement dit, les bras 52 reliés aux premières et deuxièmes poutres 50, 51, elles-mêmes reliées respectivement aux première et deuxième parties 48, 49 de l'organe monobloc 32, permettent de garantir une déformation élastique de l'organe monobloc 32 entre ses première et deuxième parties 48, 49, selon une direction axiale ou selon une direction radiale ou selon une direction axiale et une direction radiale par rapport à l'axe longitudinal X32, tout en limitant un effort généré par cette déformation élastique. En outre, les premières et deuxièmes poutres 50, 51 permettent de transmettre un couple fourni par le moteur électrique 16 au réducteur 19.

Par conséquent, la déformation élastique des bras 52 par rapport aux premières et deuxièmes poutres 50, 51 permet, lors de l'activation électrique du moteur électrique 16 provoquant l'entraînement en rotation du rotor 16a, de limiter des efforts appliqués au premier étage de réduction 37 du réducteur 19, de limiter des bruits de fonctionnement du réducteur 19, de rattraper un ou plusieurs désalignements du moteur électrique 16 par rapport au réducteur 19 et d'améliorer le rendement du réducteur 19.

On note L50 une longueur des premières poutres 50 de l'organe monobloc 32 et L51 une longueur des deuxièmes poutres 51 de l'organe monobloc 32. Ici, les longueurs L50, L51 sont considérées suivant la direction de l'axe longitudinal X32 de l'organe monobloc 32.

Ici, la longueur L50, L51 des premières et deuxièmes poutres 50, 51 est identique.

En variante, non représentée, la longueur L50 des premières poutres 50 est différente de la longueur L51 des deuxièmes poutres 51.

Ici, l'organe monobloc 32 comprend quatre premières et deuxièmes poutres 50, 51, dont deux premières poutres 50 et deux deuxièmes poutres 51, réparties angulairement à 90° l'une par rapport à l'autre autour de l'axe longitudinal X32, et quatre bras 52 répartis angulairement à 90° l'un par rapport à l'autre autour de l'axe longitudinal X32. En outre, les premières et deuxièmes poutres 50, 51 sont réparties alternativement entre les premières poutres 50 et les deuxièmes poutres 51 autour de l'axe longitudinal X32, autrement dit une première poutre 50 est disposée entre deux deuxièmes poutres 51 et une deuxième poutre 51 est disposée entre deux premières poutres 50 autour de l'axe longitudinal X32.

Le nombre de premières et deuxièmes poutres et le nombre de bras ne sont pas limitatifs et peuvent être différents. Ils peuvent être, par exemple, supérieurs ou égaux à deux.

En particulier, dans une variante, non représentée, l'organe monobloc 32 comprend six premières et deuxièmes poutres 50, 51, dont trois premières poutres 50 et trois deuxièmes poutres 51, réparties angulairement à 60° l'une par rapport à l'autre autour de l'axe longitudinal X32, et six bras 52 répartis angulairement à 60° l'un par rapport à l'autre autour de l'axe longitudinal X32. En outre, les premières et deuxièmes poutres 50, 51 sont réparties alternativement entre les premières poutres 50 et les deuxièmes poutres 51 autour de l'axe longitudinal X32.

Avantageusement, le nombre de premières et deuxièmes poutres 50, 51 et le nombre de bras 52 sont égaux. En outre, les premières et deuxièmes poutres 50, 51 et les bras 52 sont répartis uniformément autour de l'axe longitudinal X32. Le nombre de premières poutres 50 et le nombre de deuxièmes poutres 51 sont égaux. En outre, les premières poutres 50 et les deuxièmes poutres 51 sont réparties uniformément autour de l'axe longitudinal X32.

Avantageusement, chacune des premières poutres 50 présente une section en forme de trapèze isocèle, dont une première base 56 relie la première poutre 50 à la première partie 48 de l'organe monobloc 32 et dont une deuxième base 57 relie la première poutre 50 à deux des bras 52 de l'organe monobloc 32, la première base 56 étant plus étendue, autrement dit plus large ou plus grande, que la deuxième base 57. De même, chacune des deuxièmes poutres 51 présente une section en forme de trapèze isocèle, dont une première base 56 relie la deuxième poutre 51 à la deuxième partie 49 de l'organe monobloc 32 et dont une deuxième base 57 relie la deuxième poutre 51 à deux des bras 52 de l'organe monobloc 32, la première base 56 est plus étendue, autrement dit plus large ou plus grande, que la deuxième base 57.

A titre d'exemple nullement limitatif, une étendue, autrement dit une largeur, I56 de la première base 56 de chacune des premières et deuxièmes poutres 50, 51 est de l'ordre de deux millimètres et demi et une étendue, autrement dit une largeur, I57 de la deuxième base 57 de chacune des premières et deuxièmes poutres 50, 51 est de l'ordre d'un millimètre. Ici, les étendues I56, I57 sont considérées suivant une direction perpendiculaire à l'axe longitudinal X32 de de l'organe monobloc 32.

En outre, également à titre d'exemple nullement limitatif, chacune des premières et deuxièmes poutres 50, 51 présente une épaisseur moyenne emoy50, emoy51 de l'ordre d'un millimètre, suivant toute leur longueur L50, L51. Ici, l'épaisseur moyenne emoy50, emoy51 des premières et deuxièmes poutres 50, 51 est considérée comme la dimension de la première ou deuxième poutre 50, 51 concernée, séparant l'une de l'autre la face interne, tournée vers l'axe longitudinal X32, et la face externe, tournée à l'opposé de l'axe longitudinal X32, de la première ou deuxième poutre 50, 51 concernée, cette dimension étant moyennée sur la longueur L50, L51 de la première ou deuxième poutre 50, 51 concernée.

Par ailleurs, chaque bras 52 présente une largeur moyenne Imoy52 de l'ordre d'un millimètre et une épaisseur moyenne emoy52 de l'ordre d'un millimètre. Ici, la largeur moyenne Imoy52 des bras 52 est considérée comme la dimension du bras 52 concerné, séparant l'une de l'autre la face interne, tournée vers l'axe longitudinal X32, et la face externe, tournée à l'opposé de l'axe longitudinal X32, du bras 52 concerné, cette dimension étant moyennée sur la longueur du bras 52.

Ici, les premières et deuxièmes poutres 50, 51 présentent respectivement une forme différente, en particulier au niveau de leur face interne respective tournée vers l'axe longitudinal X32, de sorte à permettre le démoulage de l'organe monobloc 32 lors de la fabrication de celui-ci.

En variante, non représentée, les premières et deuxièmes poutres 50, 51 présentent une forme identique.

Lors de l'activation électrique du moteur électrique 16 provoquant l'entraînement en rotation du rotor 16a et dans le cas où l'organe monobloc 32 rattrape un désalignement radial par rapport à l'axe longitudinal X32, la longueur L50 des premières poutres 50 permet un fléchissement de celles-ci.

Ainsi, la deuxième partie 49 de l'organe monobloc 32 reste parallèle à l'axe longitudinal X32, de même que les deuxièmes poutres 51. Par contre, la première partie 48 de l'organe monobloc 32 est inclinée par rapport à l'axe longitudinal X32, de même que les premières poutres 50 et les bras 52.

Ici, la première partie 48 de l'organe monobloc 32 rotule autour d'un axe de rotation X16a du rotor 16a. L'axe de rotation X16a du rotor 16a est confondu avec l'axe de rotation X19 du réducteur 19. Par conséquent, l'axe de rotation X16a et l'axe de rotation X19 sont représentés par un même trait d'axe aux figures 4 et 5. Chacune des premières poutres 50 est inclinée par rapport à l'axe longitudinal X32, d'une valeur d'angle semblable à celle de la première partie 48 de l'organe monobloc 32 par rapport à l'axe longitudinal X32.

En outre, lors de l'activation électrique du moteur électrique 16 provoquant l'entraînement en rotation du rotor 16a et dans le cas où l'organe monobloc 32 rattrape un désalignement angulaire par rapport à l'axe longitudinal X32, les bras 52 permettent une rotation autour des premières poutres 50 ou des deuxièmes poutres 51 suivant une direction parallèle à l'axe longitudinal X32 et passant respectivement par les premières poutres 50 ou les deuxièmes poutres 51.

Ainsi, soit la première partie 48 de l'organe monobloc 32 est inclinée par rapport à la deuxième partie 49 de l'organe monobloc 32 et donc par rapport à l'axe longitudinal X32 soit la deuxième partie 49 de l'organe monobloc 32 est inclinée par rapport à la première partie 48 de l'organe monobloc 32 et donc par rapport à l'axe longitudinal X32.

De cette manière, un désalignement radial et/ou un désalignement angulaire se produit, lorsque le pignon solaire 40 du premier étage de réduction 37 se met de travers par rapport à l'axe de rotation X ou lorsque l'arbre 53 du rotor 16a se met de travers par rapport à l'axe de rotation X. Par rapport à la définition des pièces, en l'occurrence par rapport à leur dispersion dans leur plage de tolérance, le désalignement est soit radial, soit angulaire, soit radial et angulaire.

L'organe monobloc 32 est donc pourvu d'un premier axe de rotation X50/52 passant par les extrémités des premières poutres 50, qui relient ces dernières aux bras 52, et d'un deuxième axe de rotation X51/52 passant par les extrémités des deuxièmes poutres 51, qui relient ces dernières aux bras 52.

Ici, le premier axe de rotation X50/52 et le deuxième axe de rotation X51/52 sont perpendiculaires l'un par rapport à l'autre, mais non concourants l'un avec l'autre.

De cette manière, les premier et deuxième axes de rotation X50/52, X51/52 permettent de créer un cardan entre les première et deuxième parties 48, 49 de l'organe monobloc 32.

On note Ø32 un diamètre extérieur de l'organe monobloc 32.

Avantageusement, une valeur maximale d'un désalignement radial entre le rotor 16a du moteur électrique 16 et l'arbre d'entrée 43 du réducteur 19 qui est rattrapé par l'organe monobloc 32 du dispositif de transmission de couple 31 est d'un dixième de la valeur du diamètre extérieur Ø32 de l'organe monobloc 32 et, préférentiellement, d'un vingtième de la valeur du diamètre extérieur Ø32 de l'organe monobloc 32.

Avantageusement, ce désalignement radial entre le rotor 16a du moteur électrique 16 et l'arbre d'entrée 43 du réducteur 19 est compris entre une valeur nulle et une valeur de trois millimètres, selon une direction radiale par rapport à l'axe de rotation X, pour une valeur du diamètre extérieur Ø32 de l'organe monobloc 32 comprise entre huit millimètres et trente-deux millimètres.

Avantageusement, la première valeur d'inclinaison α1 et la deuxième valeur d'inclinaison α2 sont égales.

Avantageusement, les première et deuxième valeurs d'inclinaison α1, α2 sont chacune de l'ordre de 45°.

En variante, non représentée, la première valeur d'inclinaison α1 est différente de la deuxième valeur d'inclinaison α2.

Avantageusement, le dispositif de transmission de couple 31 est déterminé pour transmettre un couple à partir du moteur électrique 16 au réducteur 19, lors de l'activation électrique du moteur électrique 16 provoquant l'entraînement en rotation du rotor 16a, présentant une valeur maximale de l'ordre de 0,3 Newton mètre, préférentiellement de l'ordre de 0,15 Newton mètre.

Avantageusement, les bras 52 sont dits « souples » et les premières et deuxièmes poutres 50, 51 sont dites « rigides ».

Avantageusement, les bras 52 sont plus souples, autrement dit plus flexibles, que les premières et deuxièmes poutres 50, 51 entre 1 et 9 fois et, de préférence, entre 2,5 et 6,5 fois. Autrement dit, un ratio de rigidité entre les bras 52 et les premières et deuxièmes poutres 50, 51 est entre 1 et 9 fois et, de préférence, entre 2,5 et 6,5 fois.

Pour établir la plage de valeurs de ratio de rigidité entre les bras 52 et les premières et deuxièmes poutres 50, 51 de l'organe monobloc 32, différentes valeurs de déplacement sont à déterminer en fonction d'un effort d'une valeur prédéterminée qui est appliqué au niveau d'une zone prédéterminée de l'organe monobloc 32.

Avantageusement, l'établissement de la plage de valeurs de ratio de rigidité entre les bras 52 et les premières et deuxièmes poutres 50, 51 de l'organe monobloc 32 est mis en oeuvre par le calcul de valeurs de plusieurs ratios de rigidité distincts. Chacun des ratios de rigidité est déterminé pour une zone prédéterminée de l'organe monobloc 32 différente.

Avantageusement, afin d'établir la plage de valeurs de ratio de rigidité entre les bras 52 et les premières et deuxièmes poutres 50, 51 de l'organe monobloc 32, une première valeur d'un premier ratio de rigidité et une deuxième valeur d'un deuxième ratio de rigidité sont déterminées, comme décrit ci-après.

Une première valeur de déplacement de l'une des deuxièmes poutres 51, qui s'étend entre la deuxième partie 49 et deux des bras 52 de l'organe monobloc 32, est déterminée. Pour déterminer cette première valeur de déplacement, en particulier par calcul, on considère, dans un premier temps, comme fixe la deuxième partie 49 de l'organe monobloc 32, en particulier par l'intermédiaire d'un deuxième logement 55 de la deuxième partie 49 de l'organe monobloc 32. Un effort F1 d'une valeur d'un Newton est appliqué selon une direction perpendiculaire à l'axe longitudinal X32 au niveau d'une zone de jonction externe entre ladite deuxième poutre 51 et l'un des deux bras 52 reliés à cette deuxième poutre 51 et perpendiculaire à un plan P passant par les deux deuxièmes poutres 51. Autrement dit, la direction de l'effort F1 appliqué est perpendiculaire à ladite deuxième poutre 51, orientée depuis l'extérieur vers l'intérieur de l'organe monobloc 32 et radiale par rapport à l'axe longitudinal X32 de l'organe monobloc 32. Puis, une première distance Dpoutre1 de la zone qui reçoit l'effort F1 s'étant déplacée est déterminée, pour obtenir la première valeur de déplacement.

Une deuxième valeur de déplacement de l'une des premières poutres 50, qui s'étend entre la première partie 48 et deux des bras 52 de l'organe monobloc 32, est déterminée. Pour déterminer cette deuxième valeur de déplacement, en particulier par calcul, on considère, dans un deuxième temps, comme fixe la première partie 48 de l'organe monobloc 32, en particulier par l'intermédiaire d'un premier logement 54 de la première partie 48 de l'organe monobloc 32. Un effort F2 d'une valeur d'un Newton est appliqué selon une direction perpendiculaire à l'axe longitudinal X32 au niveau d'une zone de jonction interne entre ladite première poutre 50 et l'un des deux bras 52 reliés à cette première poutre 50. Autrement dit, la direction de l'effort F2 appliqué est perpendiculaire à ladite première poutre 50, orientée depuis l'extérieur vers l'intérieur de l'organe monobloc 32 et radiale par rapport à l'axe longitudinal X32 de l'organe monobloc 32. Puis, une deuxième distance Dpoutre2 de la zone qui reçoit l'effort F2 s'étant déplacée est déterminée, pour obtenir la deuxième valeur de déplacement.

Une troisième valeur de déplacement de deux bras 52 adjacents reliés à l'une des premières poutres 50 est déterminée. Pour déterminer cette troisième valeur de déplacement, en particulier par calcul, on considère, dans un troisième temps, comme fixe la face interne de chacune des premières et deuxièmes poutres 50, 51, autrement dit orientée vers l'axe longitudinal X32. Un effort F3 d'une valeur d'un Newton est appliqué selon une direction parallèle à l'axe longitudinal X32 sur une face plane 52a de chacun des deux bras 52 en lien avec ladite première poutre 50, qui est reliée à la première partie 48 de l'organe monobloc 32. Autrement dit, la direction de l'effort F3 appliqué est perpendiculaire à la zone plane 52a des deux bras 52, orientée depuis la première partie 48 vers la deuxième partie 49 de l'organe monobloc 32 et axiale par rapport à l'axe longitudinal X32 de l'organe monobloc 32. Puis, une troisième distance Dbras de la zone qui reçoit l'effort F3 s'étant déplacée est déterminée pour obtenir la troisième valeur de déplacement.

Ainsi, la première valeur du premier ratio de rigidité entre ladite deuxième poutre 51 et l'un des bras 52 est égale au ratio de la troisième valeur de déplacement de la troisième distance Dbras sur la première valeur de déplacement de la première distance Dpoutre1. En outre, la deuxième valeur du deuxième ratio de rigidité entre ladite première poutre 50 et deux des bras 52 est égale au ratio de la troisième valeur de déplacement de la troisième distance Dbras sur la deuxième valeur de déplacement de la deuxième distance Dpoutre2.

Avantageusement, la première partie 48 de l'organe monobloc 32 comprend le premier logement 54. Le premier logement 54 reçoit, autrement dit est configuré pour recevoir ou pour loger, une partie de l'arbre 53 du rotor 16a du moteur électrique 16, en particulier dans la configuration assemblée de l'actionneur électromécanique 11.

Ici, la partie de l'arbre 53 du rotor 16a du moteur électrique 16 est en contact direct avec le premier logement 54 de la première partie 48 de l'organe monobloc 32.

En variante, non représentée, le dispositif de transmission de couple 31 comprend, en outre, un adaptateur. L'adaptateur est monté, autrement dit est configuré pour être monté, sur une partie de l'arbre 53 du rotor 16a du moteur électrique 16, en particulier dans la configuration assemblée de l'actionneur électromécanique 11. Le montage peut être réalisé, par exemple, par un emmanchement en force de l'adaptateur sur la partie de l'arbre 53 du rotor 16a. Dans ce cas, le premier logement 54 reçoit, autrement dit est configuré pour recevoir ou pour loger, la partie de l'arbre 53 du rotor 16a du moteur électrique 16 par l'intermédiaire de l'adaptateur, en particulier dans la configuration assemblée de l'actionneur électromécanique 11. Ainsi, la partie de l'arbre 53 du rotor 16a du moteur électrique 16 est en contact avec le premier logement 54 de la première partie 48 de l'organe monobloc 32 au travers de l'adaptateur.

Avantageusement, le premier logement 54 de la première partie 48 de l'organe monobloc 32 présente une première forme, en particulier en forme de croix. La partie de l'arbre 53 du rotor 16a présente une deuxième forme, en particulier en forme de méplat, telle que, par exemple, l'extrémité libre d'un tournevis plat. En outre, la deuxième forme de la partie de l'arbre 53 du rotor 16a est configurée pour être insérée, autrement dit est insérée, à l'intérieur de la première forme du premier logement 54 de la première partie 48 de l'organe monobloc 32, en particulier dans la configuration assemblée de l'actionneur électromécanique 11.

Ainsi, l'insertion de la partie de l'arbre 53 du rotor 16a à l'intérieur du premier logement 54 de la première partie 48 de l'organe monobloc 32 permet de réaliser une liaison de type cardan.

De cette manière, l'organe monobloc 32 permet un déplacement radial et/ou angulaire par rapport à l'axe longitudinal X32 par déformation des bras 52 et/ou des premières et deuxièmes poutres 50, 51 les uns par rapport aux autres, ainsi qu'un effet de rotulage, grâce à la liaison constituée par l'insertion de la partie de l'arbre 53 du rotor 16a à l'intérieur du premier logement 54 de la première partie 48 de l'organe monobloc 32.

Par conséquent, un premier cardan, formé par l'organe monobloc 32, et un deuxième cardan, formé par la liaison constituée par l'insertion de la partie de l'arbre 53 du rotor 16a à l'intérieur du premier logement 54 de la première partie 48 de l'organe monobloc 32, permettent de rattraper des désalignements par rapport à l'axe de rotation X, afin d'en limiter l'impact sur le moteur électrique 16 et sur le réducteur 19.

En variante, non représentée, la première forme du premier logement 54 de la première partie 48 de l'organe monobloc 32 est en forme de fente.

Dans une autre variante, non représentée, la première forme du premier logement 54 de la première partie 48 de l'organe monobloc 32 comprend des trous, pouvant être, par exemple, au nombre de deux. En outre, la deuxième forme de la partie de l'arbre 53 du rotor 16a comprend des pions, tels que, par exemple, sous la forme d'une fourchette et pouvant être, par exemple, au nombre de deux.

Egalement dans une autre variante, non représentée, la première forme du premier logement 54 de la première partie 48 de l'organe monobloc 32 est une forme d'étoile ou de denture interne. En outre, la deuxième forme de la partie de l'arbre 53 du rotor 16a est une forme d'étoile ou de denture externe.

Avantageusement, le pignon solaire 40 du premier étage de réduction 37 comprend un arbre 59.

Avantageusement, la deuxième partie 49 de l'organe monobloc 32 comprend le deuxième logement 55. Le deuxième logement 55 reçoit, autrement dit est configuré pour recevoir ou pour loger, une partie du pignon solaire 40 du premier étage de réduction 37, en particulier dans la configuration assemblée de l'actionneur électromécanique 11.

Avantageusement, le dispositif de transmission de couple 31 comprend, en outre, un élément d'accouplement 62. L'élément d'accouplement 62 est assemblé, autrement dit est configuré pour être assemblé, à l'intérieur du deuxième logement 55 de la deuxième partie 49 de l'organe monobloc 32, en particulier dans une configuration assemblée du dispositif de transmission de couple 31. En outre, l'élément d'accouplement 62 est assemblé sur l'arbre 59 du pignon solaire 40.

Ainsi, l'élément d'accouplement 62 permet de transmettre le couple fourni par le moteur électrique 16 à partir de l'organe monobloc 32 vers le réducteur 19, en particulier vers le premier étage de réduction 37.

Ici, l'organe monobloc 32 et l'élément d'accouplement 62 sont deux pièces distinctes qui sont assemblées l'une avec l'autre, de sorte à être solidaires entre elles.

Ainsi, le dispositif de transmission de couple 31 est un sous-ensemble constitué par l'organe monobloc 32 et l'élément d'accouplement 62, de sorte à transmettre un couple entre le rotor 16a du moteur électrique 16 et l'arbre d'entrée 43 du réducteur 19, en particulier lors de l'activation électrique du moteur électrique 16 provoquant l'entraînement en rotation du rotor 16a.

Avantageusement, l'assemblage de l'élément d'accouplement 62 à l'intérieur du deuxième logement 55 de la deuxième partie 49 de l'organe monobloc 32 est mis en oeuvre par emmanchement de l'élément d'accouplement 62 dans le deuxième logement 55 de la deuxième partie 49 de l'organe monobloc 32.

En variante, l'assemblage de l'élément d'accouplement 62 à l'intérieur du deuxième logement 55 de la deuxième partie 49 de l'organe monobloc 32 est mis en oeuvre par surmoulage de la deuxième partie 49 de l'organe monobloc 32 autour de l'élément d'accouplement 62.

Avantageusement, l'élément d'accouplement 62 est réalisé dans une matière métallique, pouvant être, par exemple, un acier fritté.

Avantageusement, l'élément d'accouplement 62 comprend un orifice 60. En outre, l'orifice 60 de l'élément d'accouplement 62 reçoit, autrement dit est configuré pour recevoir ou pour loger, l'arbre 59 du pignon solaire 40 du premier étage de réduction 37, en particulier dans la configuration assemblée de l'actionneur électromécanique 11.

Ainsi, le deuxième logement 55 de la deuxième partie 49 de l'organe monobloc 32 reçoit, autrement dit est configuré pour recevoir ou pour loger, l'arbre 59 du pignon solaire 40 du premier étage de réduction 37 par l'intermédiaire de l'élément d'accouplement 62, en particulier dans la configuration assemblée de l'actionneur électromécanique 11.

De cette manière, l'arbre 59 du pignon solaire 40 du premier étage de réduction 37 est en contact avec le deuxième logement 55 de la deuxième partie 49 de l'organe monobloc 32 au travers de l'élément d'accouplement 62.

Avantageusement, l'assemblage de l'élément d'accouplement 62 sur l'arbre 59 du pignon solaire 40 est mis en oeuvre par emmanchement en force.

Ici et de manière nullement limitative, l'élément d'accouplement 62 est emmanché en force à l'intérieur du deuxième logement 55 de la deuxième partie 49 de l'organe monobloc 32 puis est emmanché en force sur l'arbre 59 du pignon solaire 40 du premier étage de réduction 37.

On note L62 une longueur de l'élément d'accouplement 62.

Avantageusement, dans le cas où le frein 25 est disposé entre le moteur électrique 16 et le réducteur 19, l'élément d'accouplement 62 dépasse du deuxième logement 55 de la deuxième partie 49 de l'organe monobloc 32 et est disposé en partie entre les bras 52 et les premières et deuxièmes poutres 50, 51 de l'organe monobloc 32, en particulier dans la configuration assemblée du dispositif de transmission de couple 31.

Ainsi, dans le cas où les bras 52 cassent, lors de l'activation électrique du moteur électrique 16 provoquant l'entraînement en rotation du rotor 16a, les premières et deuxièmes poutres 50, 51 continuent de transmettre le couple entre les première et deuxième parties 48, 49 de l'organe monobloc 32, par la mise en appui de chacune des premières poutres 50 contre l'une des deuxièmes poutres 51, tout en étant centrées par rapport à l'axe longitudinal X32 par l'intermédiaire de l'élément d'accouplement 62.

En variante, non représentée, le dispositif de transmission de couple 31 est dépourvu de l'élément d'accouplement 62. Ainsi, l'arbre 59 du pignon solaire 40 du premier étage de réduction 37 est en contact direct avec le deuxième logement 55 de la deuxième partie 49 de l'organe monobloc 32. Dans ce cas, l'arbre 59 du pignon solaire 40 du premier étage de réduction 37 présente une forme compatible avec la forme du deuxième logement 55 de la deuxième partie 49 de l'organe monobloc 32.

Avantageusement, l'organe monobloc 32 est réalisé dans une matière plastique, de préférence par moulage.

A titre d'exemple nullement limitatif, l'organe monobloc 32 est réalisé dans une matière plastique de type PolyOxyMéthylène, de sigle POM.

On note L48 une longueur de la première partie 48 de l'organe monobloc 32.

Avantageusement, la somme de la longueur L48 de la première partie 48 de l'organe monobloc 32 et la longueur L50 des premières poutres 50 de l'organe monobloc 32 définit une zone de rattrapage 58 de jeu axial de l'arbre 53 du rotor 16a à l'intérieur de l'organe monobloc 32, suivant la direction de l'axe longitudinal X32.

Ainsi, selon une direction axiale par rapport à l'axe longitudinal X32, l'organe monobloc 32 accepte une certaine dispersion de la position de la partie de l'arbre 53 du rotor 16a à l'intérieur du premier logement 54 de la première partie 48 de l'organe monobloc 32.

On note QJl7int un diamètre interne du carter 17.

Avantageusement, le diamètre extérieur Ø32 de l'organe monobloc 32 est dépendant du diamètre interne Ø17int du carter 17.

Avantageusement, la valeur du diamètre extérieur Ø32 de l'organe monobloc 32 est inférieure ou égale à trente-deux millimètres pour une valeur du diamètre interne Ø17int du carter 17 de l'ordre de trente-trois millimètres. De préférence, la valeur du diamètre extérieur Ø32 de l'organe monobloc 32 est inférieure ou égale à quinze millimètres et, plus préférentiellement, de l'ordre de onze millimètres pour une valeur du diamètre interne Ø17int du carter 17 de l'ordre de trente-trois millimètres.

Avantageusement, l'arbre 53 du rotor 16a du moteur électrique 16, le dispositif de transmission de couple 31, en particulier l'organe monobloc 32, et le pignon solaire 40 du premier étage de réduction 37 du réducteur 19 de l'actionneur électromécanique 11 sont identiques quel que soit le type de moteur électrique 16, pouvant être de type sans balais à commutation électronique, appelé également « BLDC » (acronyme du terme anglo-saxon BrushLess Direct Current) ou « synchrone à aimants permanents », de type asynchrone ou de type à courant continu.

Ainsi, une interface commune entre le moteur électrique 16 et le réducteur 19 est mise en oeuvre, de sorte à garantir une modularité dans une gamme d'actionneurs électromécaniques 11 comprenant différentes versions de moteurs électriques 16 et différentes versions de réducteurs 19.

Grâce à la présente invention, le dispositif de transmission de couple permet de rattraper un ou plusieurs désalignements axiaux, radiaux et/ou angulaires entre le rotor du moteur électrique et l'arbre d'entrée du réducteur, de sorte à transmettre un couple fourni par le moteur électrique, lors de son activation électrique provoquant l'entraînement en rotation du rotor, tout en limitant la génération d'efforts et de frottements provoquant du bruit et une perte de rendement du réducteur.

De nombreuses modifications peuvent être apportées aux exemples de réalisation décrits précédemment, sans sortir du cadre de l'invention défini par les revendications.

En outre, les modes de réalisation et variantes envisagés peuvent être combinés pour générer de nouveaux modes de réalisation de l'invention, sans sortir du cadre de l'invention défini par les revendications.

## Revendications

1. Actionneur électromécanique (11) d'un dispositif d'occultation (3),
l'actionneur électromécanique (11) comprenant au moins :
- un carter (17),
- un moteur électrique (16),
- un réducteur (19), et
- un dispositif de transmission de couple (31), le dispositif de transmission de couple (31) comprenant au moins un organe monobloc (32),
le moteur électrique (16) comprenant au moins :
- un rotor (16a), et
- un stator (16b),
le réducteur (19) comprenant au moins :
- un arbre d'entrée (43), et
- un arbre de sortie (67),
l'arbre d'entrée (43) du réducteur (19) étant accouplé avec le rotor (16a) du moteur électrique (16) par l'intermédiaire d'au moins le dispositif de transmission de couple (31),
le moteur électrique (16), le réducteur (19) et le dispositif de transmission de couple (31) étant logés à l'intérieur du carter (17),
l'organe monobloc (32) comprenant au moins :
- une première partie (48), et
- une deuxième partie (49), **caractérisé en ce que** l'organe monobloc (32) comprend au moins :
- une pluralité de premières poutres (50), chacune des premières poutres (50) s'étendant à partir de la première partie (48),
- une pluralité de deuxièmes poutres (51), chacune des deuxièmes poutres (51) s'étendant à partir de la deuxième partie (49), et
- une pluralité de bras (52), chaque bras (52) s'étendant, d'une part, à partir de l'une des premières poutres (50) et, d'autre part, à partir de l'une des deuxièmes poutres (51),
et **en ce que** chaque bras (52) est incliné, d'une part, par rapport à l'une des premières poutres (50) d'une première valeur d'inclinaison (α1) comprise entre 25° et 65° et, d'autre part, par rapport à l'une des deuxièmes poutres (51) d'une deuxième valeur d'inclinaison (α2) comprise entre 25° et 65°.

2. Actionneur électromécanique (11) d'un dispositif d'occultation (3) selon la revendication 1, **caractérisé en ce que** les première et deuxième valeurs d'inclinaison (α1, α2) sont chacune de l'ordre de 45°.

3. Actionneur électromécanique (11) d'un dispositif d'occultation (3) selon la revendication 1 ou selon la revendication 2, **caractérisé en ce que** chacune des premières et deuxièmes poutres (50, 51) présente une section en forme de trapèze isocèle, dont :
- une première base (56) relie la première poutre (50) à la première partie (48) de l'organe monobloc (32), respectivement relie la deuxième poutre (51) à la deuxième partie (49) de l'organe monobloc (32), et
- une deuxième base (57) relie la première poutre (50), respectivement la deuxième poutre (51), à deux des bras (52) de l'organe monobloc (32), la première base (56) étant plus étendue que la deuxième base (57).

4. Actionneur électromécanique (11) d'un dispositif d'occultation (3) selon l'une quelconque des revendications 1 à 3, **caractérisé en ce que** les bras (52) sont plus souples que les premières et deuxièmes poutres (50, 51) entre 1 et 9 fois.

5. Actionneur électromécanique (11) d'un dispositif d'occultation (3) selon l'une quelconque des revendications 1 à 4, **caractérisé**
**en ce que** l'organe monobloc (32) comprend quatre premières et deuxièmes poutres (50, 51) réparties angulairement à 90° l'une par rapport à l'autre autour d'un axe longitudinal (X32) et quatre bras (52) répartis angulairement à 90° l'un par rapport à l'autre autour de l'axe longitudinal (X32),
**en ce que** les premières et deuxièmes poutres (50, 51) comprennent deux premières poutres (50) et deux deuxièmes poutres (51),
et **en ce que** les premières et deuxièmes poutres (50, 51) sont réparties alternativement entre les premières poutres (50) et les deuxièmes poutres (51) autour de l'axe longitudinal (X32).

6. Actionneur électromécanique (11) d'un dispositif d'occultation (3) selon l'une quelconque des revendications 1 à 5, **caractérisé**
**en ce que** le rotor (16a) du moteur électrique (16) comprend au moins un arbre (53),
et **en ce que** la première partie (48) de l'organe monobloc (32) comprend un premier logement (54), le premier logement (54) recevant une partie de l'arbre (53) du rotor (16a) du moteur électrique (16).

7. Actionneur électromécanique (11) d'un dispositif d'occultation (3) selon la revendication 6, **caractérisé**
**en ce que** le premier logement (54) de la première partie (48) de l'organe monobloc (32) présente une première forme, la première forme étant une forme de croix,
**en ce que** ladite partie de l'arbre (53) du rotor (16a) présente une deuxième forme, la deuxième forme étant une forme de méplat,
et **en ce que** la deuxième forme de ladite partie de l'arbre (53) du rotor (16a) est insérée à l'intérieur de la première forme du premier logement (54) de la première partie (48) de l'organe monobloc (32).

8. Actionneur électromécanique (11) d'un dispositif d'occultation (3) selon la revendication 6 ou selon la revendication 7, **caractérisé**
**en ce que** le réducteur (19) comprend au moins un étage de réduction (37), l'étage de réduction (37) étant de type épicycloïdal,
**en ce que** l'étage de réduction (37) comprend au moins :
- un pignon solaire (40), le pignon solaire (40) formant l'arbre d'entrée (43) du réducteur (19), et
- une pluralité de pignons satellites (63),
et **en ce que** la deuxième partie (49) de l'organe monobloc (32) comprend un deuxième logement (55), le deuxième logement (55) recevant une partie du pignon solaire (40) de l'étage de réduction (37).

9. Actionneur électromécanique (11) d'un dispositif d'occultation (3) selon la revendication 8, **caractérisé**
**en ce que** le dispositif de transmission de couple (31) comprend, en outre, un élément d'accouplement (62),
**en ce que** l'élément d'accouplement (62) est assemblé à l'intérieur du deuxième logement (55) de la deuxième partie (49) de l'organe monobloc (32),
**en ce que** le pignon solaire (40) de l'étage de réduction (37) comprend un arbre (59),
et **en ce que** l'élément d'accouplement (62) est assemblé sur l'arbre (59) du pignon solaire (40).

10. Dispositif d'occultation (3),
le dispositif d'occultation (3) comprenant au moins :
- un écran (2), et
- un actionneur électromécanique (11), l'écran (2) étant entraîné en déplacement par l'actionneur électromécanique (11),
**caractérisé en ce que** l'actionneur électromécanique (11) est conforme à l'une quelconque des revendications 1 à 9.

## Patentansprüche

1. Elektromechanischer Aktuator (11) einer Abdeckvorrichtung (3),
der elektromechanische Aktuator (11) mindestens umfassend:
- ein Gehäuse (17),
- einen Elektromotor (16),
- ein Untersetzungsgetriebe (19), und
- eine Drehmomentübertragungsvorrichtung (31), die Drehmomentübertragungsvorrichtung (31) umfassend mindestens ein einteiliges Element (32),
der Elektromotor (16), mindestens umfassend:
- einen Rotor (16a), und
- einen Stator (16b),
das Untersetzungsgetriebe (19) mindestens umfassend:
- eine Eingangswelle (43), und
- eine Ausgangswelle (67),
wobei die Eingangswelle (43) des Untersetzungsgetriebes (19) über mindestens die Drehmomentübertragungsvorrichtung (31) mit dem Rotor (16a) des Elektromotors (16) gekoppelt ist,
wobei der Elektromotor (16), das Untersetzungsgetriebe (19) und die Drehmomentübertragungsvorrichtung (31) in dem Inneren des Gehäuses (17) untergebracht sind, wobei das einteilige Element (32) mindestens Folgendes umfasst:
- einen ersten Abschnitt (48), und
- einen zweiten Abschnitt (49), **dadurch gekennzeichnet, dass** das einteilige Element (32) mindestens Folgendes umfasst:
- eine Vielzahl von ersten Trägern (50), wobei sich jeder der ersten Träger (50) von dem ersten Abschnitt (48) erstreckt,
- eine Vielzahl von zweiten Trägern (51), wobei sich jeder der zweiten Träger (51) von dem zweiten Abschnitt (49) erstreckt, und
- eine Vielzahl von Armen (52), wobei sich jeder Arm (52) einerseits von einem der ersten Träger (50) und andererseits von einem der zweiten Träger (51) erstreckt, und dass jeder Arm (52) einerseits geneigt ist, in Bezug auf einen der ersten Träger (50) um einen ersten Neigungswert (a1) zwischen 25° und 65° und andererseits in Bezug auf einen der zweiten Träger (51) um einen zweiten Neigungswert (a2) zwischen 25° und 65° geneigt ist.

2. Elektromechanischer Aktuator (11) einer Abdeckvorrichtung (3) nach Anspruch 1, **dadurch gekennzeichnet, dass** der erste und der zweite Neigungswert (a1, a2) jeweils in der Größenordnung von 45° sind.

3. Elektromechanischer Aktuator (11) einer Abdeckvorrichtung (3) nach Anspruch 1 oder nach Anspruch 2, **dadurch gekennzeichnet, dass** jeder von dem ersten und dem zweiten Träger (50, 51) einen Querschnitt in Form eines gleichschenkligen Trapezes aufweist, wobei:
- eine erste Basis (56) den ersten Träger (50) mit dem ersten Abschnitt (48) des einteiligen Elements (32) verbindet bzw. den zweiten Träger (51) mit dem zweiten Abschnitt (49) des einteiligen Elements (32) verbindet, und
- eine zweite Basis (57) den ersten Träger (50) bzw. den zweiten Träger (51) mit zwei der Arme (52) des einteiligen Elements (32) verbindet, wobei die erste Basis (56) eine größere Erstreckung aufweist als die zweite Basis (57).

4. Elektromechanischer Aktuator (11) einer Abdeckvorrichtung (3) nach einem der Ansprüche 1 bis 3, **dadurch gekennzeichnet, dass** die Arme (52) um das 1- bis 9-Fache flexibler sind als der erste und der zweite Träger (50, 51).

5. Elektromechanischer Aktuator (11) einer Abdeckvorrichtung (3) nach einem der Ansprüche 1 bis 4, **dadurch gekennzeichnet, dass** das einteilige Element (32) vier erste und zweite Träger (50, 51), die in einem Winkel von 90° zueinander um eine Längsachse (X32) verteilt sind, und vier Arme (52), die in einem Winkel von 90° zueinander um die Längsachse (X32) verteilt sind, umfasst,
dass die ersten und zweiten Träger (50, 51) zwei erste Träger (50) und zwei zweite Träger (51) umfassen,
und dass die ersten und zweiten Träger (50, 51) abwechselnd zwischen den ersten Trägern (50) und den zweiten Trägern (51) um die Längsachse (X32) verteilt sind.

6. Elektromechanischer Aktuator (11) einer Abdeckvorrichtung (3) nach einem der Ansprüche 1 bis 5, **dadurch gekennzeichnet,**
**dass** der Rotor (16a) des Elektromotors (16) mindestens eine Welle (53) umfasst,
und **dass** der erste Abschnitt (48) des einteiligen Elements (32) eine erste Aufnahme (54) umfasst, wobei die erste Aufnahme (54) einen Abschnitt der Welle (53) des Rotors (16a) des Elektromotors (16) aufnimmt.

7. Elektromechanischer Aktuator (11) einer Abdeckvorrichtung (3) nach Anspruch 6, **dadurch gekennzeichnet,**
**dass** die erste Aufnahme (54) des ersten Abschnitts (48) des einteiligen Elements (32) eine erste Form aufweist, wobei die erste Form eine Kreuzform ist,
**dass** der Abschnitt der Welle (53) des Rotors (16a) eine zweite Form aufweist, wobei die zweite Form eine abgeflachte Form ist,
und **dass** die zweite Form des Abschnitts der Welle (53) des Rotors (16a) in die erste Form des ersten Gehäuses (54) des ersten Abschnitts (48) des einteiligen Elements (32) eingesetzt ist.

8. Elektromechanischer Aktuator (11) einer Abdeckvorrichtung (3) nach Anspruch 6 oder nach Anspruch 7, **dadurch gekennzeichnet,**
**dass** das Untersetzungsgetriebe (19) mindestens eine Untersetzungsstufe (37) umfasst, wobei die Untersetzungsstufe (37) vom Typ Epizykloid ist,
**dass** die Untersetzungsstufe (37) mindestens Folgendes umfasst:
- ein Sonnenrad (40), wobei das Sonnenrad (40) die Eingangswelle (43) des Untersetzungsgetriebes (19) bildet, und
- eine Vielzahl von Planetenrädern (63),
und **dass** der zweite Abschnitt (49) des einteiligen Elements (32) eine zweite Aufnahme (55) umfasst, wobei die zweite Aufnahme (55) einen Abschnitt des Sonnenrads (40) der Untersetzungsstufe (37) aufnimmt.

9. Elektromechanischer Aktuator (11) einer Abdeckvorrichtung (3) nach Anspruch 8, **dadurch gekennzeichnet,**
**dass** die Drehmomentübertragungsvorrichtung (31) ferner ein Kupplungselement (62) umfasst, dass das Kupplungselement (62) innerhalb der zweiten Aufnahme (55) des zweiten Abschnitts (49) des einteiligen Elements (32) zusammengesetzt ist,
**dass** das Sonnenrad (40) der Untersetzungsstufe (37) eine Welle (59) umfasst, und dass das Kupplungselement (62) auf der Welle (59) des Sonnenrads (40) zusammengesetzt ist.

10. Abdeckvorrichtung (3),
die Abdeckvorrichtung (3) mindestens umfassend:
- eine Blende (2), und
- einen elektromechanischen Aktuator (11), wobei die Blende (2) durch den elektromechanischen Aktuator (11) in Bewegung versetzt wird,
**dadurch gekennzeichnet, dass** der elektromechanische Aktuator (11) nach einem der Ansprüche 1 bis 9 ist.

## Claims

1. An electromechanical actuator (11) of an occultation device (3),
the electromechanical actuator (11) comprising at least:
- a casing (17),
- an electric motor (16),
- a gearbox (19), and
- a torque transmission device (31), the torque transmission device (31) comprising at least one monobloc member (32),
the electric motor (16) comprising at least:
- a rotor (16a), and
- a stator (16b),
the gearbox (19) comprising at least:
- an input shaft (43), and
- an output shaft (67),
the input shaft (43) of the gearbox (19) being coupled to the rotor (16a) of the electric motor (16) via at least the torque transmission device (31),
the electric motor (16), the gearbox (19) and the torque transmission device (31) being housed inside the casing (17),
the monobloc member (32) comprising at least:
- a first part (48), and
- a second part (49),
**characterised in that** the monobloc member (32) comprises at least:
- a plurality of first beams (50), each of the first beams (50) extending from the first part (48),
- a plurality of second beams (51), each of the second beams (51) extending from the second part (49), and
- a plurality of arms (52), each arm (52) extending, on the one hand, from one of the first beams (50) and, on the other hand, from one of the second beams (51),
and **in that** each arm (52) is inclined, on the one hand, with respect to one of the first beams (50) by a first inclination value (α1) between 25° and 65° and, on the other hand, with respect to one of the second beams (51) by a second inclination value (α2) between 25° and 65°.

2. The electromechanical actuator (11) of an occultation device (3) according to claim 1, **characterised in that** the first and second inclination values (α1, α2) are each approximately 45°.

3. The electromechanical actuator (11) of an occultation device (3) according to claim 1 or according to claim 2, **characterised in that** each of the first and second beams (50, 51) has a cross-section in the shape of an isosceles trapezium, wherein:
- a first base (56) connects the first beam (50) to the first part (48) of the monobloc member (32), respectively connects the second beam (51) to the second part (49) of the monobloc member (32), and
- a second base (57) connects the first beam (50), respectively the second beam (51), to two of the arms (52) of the monobloc member (32), the first base (56) being wider than the second base (57).

4. The electromechanical actuator (11) of an occultation device (3) according to any one of claims 1 to 3, **characterised in that** the arms (52) are between 1 and 9 times more flexible than the first and second beams (50, 51).

5. The electromechanical actuator (11) of an occultation device (3) according to any one of claims 1 to 4, **characterised**
**in that** the monobloc member (32) comprises four first and second beams (50, 51) distributed angularly at 90° to one another around a longitudinal axis (X32) and four arms (52) distributed angularly at 90° to one another around the longitudinal axis (X32),
**in that** the first and second beams (50, 51) comprise two first beams (50) and two second beams (51),
and **in that** the first and second beams (50, 51) are distributed alternately between the first beams (50) and the second beams (51) around the longitudinal axis (X32).

6. The electromechanical actuator (11) of an occultation device (3) according to any one of claims 1 to 5, **characterised**
**in that** the rotor (16a) of the electric motor (16) comprises at least one shaft (53),
and **in that** the first part (48) of the monobloc member (32) comprises a first housing (54), the first housing (54) receiving part of the shaft (53) of the rotor (16a) of the electric motor (16).

7. The electromechanical actuator (11) of an occultation device (3) according to claim 6, **characterised**
**in that** the first housing (54) of the first part (48) of the monobloc member (32) has a first shape, the first shape being a cross shape,
**in that** the said part of the shaft (53) of the rotor (16a) has a second shape, the second shape being a flattened shape,
and **in that** the second shape of said part of the shaft (53) of the rotor (16a) is inserted inside the first shape of the first housing (54) of the first part (48) of the monobloc member (32).

8. The electromechanical actuator (11) of an occultation device (3) according to claim 6 or according to claim 7, **characterised**
**in that** the gearbox (19) comprises at least one gear stage (37), the gear stage (37) being of the epicyclic type,
**in that** the gear stage (37) comprises at least:
- a sun gear (40), the sun gear (40) forming the input shaft (43) of the gearbox (19), and
- a plurality of planetary gears (63),
and **in that** the second part (49) of the monobloc member (32) comprises a second housing (55), the second housing (55) receiving part of the sun gear (40) of the gear stage (37).

9. The electromechanical actuator (11) of an occultation device (3) according to claim 8, **characterised**
**in that** the torque transmission device (31) further comprises a coupling element (62),
**in that** the coupling element (62) is assembled inside the second housing (55) of the second part (49) of the monobloc member (32),
**in that** the sun gear (40) of the gear stage (37) comprises a shaft (59),
and **in that** the coupling element (62) is assembled on the shaft (59) of the sun gear (40).

10. An occultation device (3),
the occultation device (3) comprising at least:
- a screen (2), and
- an electromechanical actuator (11), the screen (2) being moved by the electromechanical actuator (11),
**characterized in that** the electromechanical actuator (11) is in accordance with any one of claims 1 to 9.
